# EUROPÄISCHE PATENTSCHRIFT

(11) **EP 3 143 633 B1**
(45) Veröffentlichungstag und Bekanntmachung des Hinweises auf die Patenterteilung: **26.09.2018**
(21) Anmeldenummer: 15718831.9
(22) Anmeldetag: 15.04.2015
(51) Int. Cl.: H01H 23/14, H01Q 1/22, H02K 35/00, H01H 9/16

(54) **SCHALTVORRICHTUNG FÜR EINEN FUNKTASTER, FUNKTASTER UND VERFAHREN ZUM ERZEUGEN EINES SCHALTSIGNALS EINES FUNKTASTERS**
SWITCHING DEVICE FOR A RADIO PUSHBUTTON, RADIO PUSHBUTTON, AND METHOD FOR GENERATING A SWITCHING SIGNAL OF A RADIO PUSHBUTTON
DISPOSITIF DE COMMUTATION POUR INTERRUPTEUR SANS FIL, INTERRUPTEUR SANS FIL ET PROCÉDÉ DE GÉNÉRATION D'UN SIGNAL DE COMMUTATION D'UN INTERRUPTEUR SANS FIL

(30) Priorität: 15.05.2014 DE 102014209192
(43) Veröffentlichungstag der Anmeldung: 22.03.2017
(73) Patentinhaber: ZF Friedrichshafen AG, 88046 Friedrichshafen (DE)
(72) Erfinder: RUFF, Eduard, 91275 Auerbach (DE)
(86) Internationale Anmeldenummer: PCT/EP2015/058157
(87) Internationale Veröffentlichungsnummer: WO 2015/172958

(56) Entgegenhaltungen:
- EP-A1- 2 747 111
- WO-A1-96/28873
- WO-A1-2013/053565
- DE-A1-102010 003 152

## Beschreibung

Die vorliegende Erfindung bezieht sich auf eine Schaltvorrichtung für einen Funktaster, auf einen Funktaster und auf ein Verfahren zum Erzeugen eines Schaltsignals eines Funktasters, insbesondere für den Bereich der Haustechnik zur Aufputzmontage.

Funktaster werden insbesondere in der Haustechnik beispielsweise als Aufputzlösung angewandt. Dabei kann per Funktaster eine Vielzahl von Verbrauchern per Schaltsignal angesteuert werden, wie beispielsweise Leuchtmittel, Jalousien und dergleichen. Die DE 20 2004 005 837 U1 offenbart ein Schaltergehäuse zur Aufputzmontage und zur Aufnahme eines elektronischen Moduls.

DE 10 2010 003152 A1 offenbart eine Schaltvorrichtung für einen Funktaster gemäß dem Oberbegriff des Anspruchs 1. Vor diesem Hintergrund schafft die vorliegende Erfindung eine verbesserte Schaltvorrichtung für einen Funktaster, einen verbesserten Funktaster und ein verbessertes Verfahren zum Erzeugen eines Schaltsignals eines Funktasters gemäß den Hauptansprüchen. Vorteilhafte Ausgestaltungen ergeben sich aus den Unteransprüchen und der nachfolgenden Beschreibung.

Gemäß Ausführungsformen der vorliegenden Erfindung kann eine Schaltvorrichtung für einen autarken Funktaster für Gebäudetechnik bereitgestellt werden, mittels derselben ein Schaltsignal erzeugt werden kann. Insbesondere ermöglicht eine Umschaltmechanik bzw. sogenannte "Toggle"-Mechanik der Schaltvorrichtung je nach Ausführungsform, dass bei einem Schaltvorgang bzw. Betätigungsvorgang lediglich ein Energieimpuls generiert werden kann oder auch zwei bzw. mehrere Energieimpulse generiert werden können. Die Umschaltungsmechanik ist ausgebildet, um in einer ersten Ausführungs- und Montagevariante bei einem Schaltvorgang einen Energiewandler lediglich einmal zu aktivieren bzw. zu betätigen und in einer zweiten Ausführungs- und Montagevariante bei einem Schaltvorgang den Energiewandler beispielsweise zweimal zu aktivieren bzw. zu betätigen.

Die vorliegende Erfindung betrifft eine wie von Anspruch 1 definierte Schaltvorrichtung für einen Funktaster.

Der Funktaster kann ausgebildet sein, um über das Schaltsignal zumindest ein externes Gerät per Funkübertragung des Schaltsignals anzusteuern. Ferner kann der Funktaster ausgebildet sein, um auf Putz montiert zu werden, beispielsweise in der Gebäudetechnik. Die Schaltvorrichtung kann auch als ein Schaltmodul bezeichnet werden. Die Schaltvorrichtung kann mechanische Komponenten zum Aktivieren bzw. Betätigen der Energiewandlereinrichtung aufweisen. Insbesondere kann die Schaltvorrichtung ausgebildet sein, um ansprechend auf einen Schaltvorgang bzw. Betätigungsvorgang, bei dem eine die mechanische Energie repräsentierende, externe Betätigungskraft auf die Schaltvorrichtung übertragen wird, die Energiewandlereinrichtung zu betätigen bzw. zu aktivieren. Die Energiewandlereinrichtung kann ausgebildet sein, um mechanische Energie der Betätigungskraft in elektrische Energie umzuwandeln. Auch kann die Energiewandlereinrichtung bistabil ausgeführt sein. Hierbei kann die Energiewandlereinrichtung den ersten stabilen Zustand und den zweiten stabilen Zustand aufweisen. Die Energiewandlereinrichtung kann ausgebildet sein, um aufgrund der durch die Betätigungsmittel und die Umschaltmittel auf die Energiewandeinrichtung übertragenen, mechanischen Energie eine Betätigungsbewegung zwischen dem ersten stabilen Zustand und dem zweiten stabilen Zustand auszuführen und dabei einen elektrischen Energieimpuls zu erzeugen bzw. zu generieren. Hierbei ist die Energiewandlereinrichtung ausgebildet, um bei einer Betätigungsbewegung von dem ersten stabilen Zustand zu dem zweiten stabilen Zustand einen elektrischen Energieimpuls zu erzeugen und bei der Betätigungsbewegung von dem zweiten stabilen Zustand zu dem ersten stabilen Zustand einen elektrischen Energieimpuls zu erzeugen. Bei den Betätigungsmitteln kann es sich um zumindest ein Hebelelement, einen Hebel, Doppelhebel, Zwillingshebel oder dergleichen handeln. Die Umschaltmittel können angeordnet und ausgebildet sein, um durch die Betätigungsmittel mechanisch kontaktierbar zu sein. Auch können die Umschaltmittel mit der Energiewandlereinrichtung mechanisch koppelbar sein. Die Umschaltmittel können ausgebildet sein, um bei einem Schaltvorgang bzw. Betätigungsvorgang die mechanische Energie von den Betätigungsmitteln auf die Energiewandlereinrichtung zu übertragen. Hierbei können die Umschaltmittel ausgebildet sein, um in einem mit der Energiewandlereinrichtung gekoppelten Zustand die Energiewandlereinrichtung von dem ersten stabilen Zustand in den zweiten stabilen Zustand und zusätzlich oder alternativ von dem zweiten stabilen Zustand in den ersten stabilen Zustand zu versetzen.

Der beschriebene Ansatz kann vorteilhafterweise gemäß Ausführungsformen der vorliegenden Erfindung zur Realisierung eines KNX-RF-fähigen Schalters bzw. Funktasters eingesetzt werden. Der Energiewandler kann aufgrund der Umschaltmechanik einerseits beim Betätigen des Schalters genügend Energie erzeugen und andererseits kann eine Betätigungskraft möglichst gering gehalten werden. Da es in den meisten Anwendungsfällen ausreichend sein kann, einen einzigen Energieimpuls zu erzeugen, braucht somit keine unnötige Energie erzeugt und keine unnötige Betätigungskraft aufgebracht werden. Zudem ist ein Einsatz in KNX-RF-Funknetzen ermöglicht, wobei eine Leistung unabhängig von einer Batterie oder einem Anschluss an das Stromnetz bezogen werden kann. Das macht einen Einsatz flexibel und wartungsarm.

Ferner können gemäß Ausführungsformen der vorliegenden Erfindung Nachteile vieler üblicher, als Lichtschalter für eine Aufputzmontage in der Gebäudetechnik vorgesehener Schaltvorrichtungen bzw. Schaltmodule vermieden werden, die unter anderem so konzipiert sind, dass beispielsweise eine Betätigung auf je einen von zwei beweglichen Hebeln eingeleitet wird, welche einen elektromagnetischen Energiewandler aktivieren. Bei solchen Schaltmodulen kann üblicherweise ein Gehäuse starr ausgebildet sein und einen gewissen Freiraum unter einer Taste erfordern, um eine Kollision bei einer Kippbewegung der Taste zu vermeiden. Gleichzeitig wird mit einem Zusatzelement der Taste einer von beispielsweise vier Codierschaltern betätigt. Während der Betätigung wird ein Energieimpuls generiert und in einem Elektronikmodul in Abhängigkeit von dem bereits betätigten Codierschalter zu einem Funksignal umgewandelt und per Funk versendet.

Solche Lichtschalter können eine Betätigungsmechanik nutzen, bei der insbesondere sowohl beim Betätigen der Taste als auch beim Loslassen zwangsläufig jeweils ein Energieimpuls generiert wird, wobei der Energiepuls beim Loslassen beispielsweise verworfen oder für eine Telegramm-Wiederholung genutzt wird, was gemäß Ausführungsformen der vorliegenden Erfindung aufgrund der Umschaltmechanik vermieden werden kann. Somit kann auch eine Problematik umgangen werden, die beinhaltet, dass eine Leistung des Energiewandlers, um KNX-RF-Telegramme versenden zu können, soweit zu erhöhen wäre, dass die Betätigungskräfte und ein Betätigungsgeräusch zumutbare Werte übersteigen würden. Zudem kann ein Doppelklick, also auch Doppelgeräusch, das eine Schalterakustik zusätzlich verschlechtern würde, gemäß Ausführungsformen der vorliegenden Erfindung vermieden werden. Hierbei kann auch ein als gewöhnungsbedürftig empfundenes und nicht immer gerne am Markt angenommenes Bedienkonzept mit zwei Wegen verhindert werden, bei dem sich beispielsweise eine Taste sich in einer Mittelstellung befinden kann und oben und unten gedrückt werden soll, denn häufig kann ein klassischer Taster mit einem Betätigungspunkt unten gewünscht sein.

Erfindungsgemäß weisen die Umschaltmittel der Schaltvorrichtung einen mit der Energiewandlereinrichtung mechanisch koppelbaren, beweglichen Schlitten und zumindest einen mittels der Betätigungsmittel betätigbaren Schlittenhebel auf. Hierbei ist der zumindest eine Schlittenhebel so ausgebildet, um den beweglichen Schlitten zwischen einer ersten Position, die dem ersten stabilen Zustand der Energiewandlereinrichtung zugeordnet ist, und einer zweiten Position zu bewegen, die dem zweiten stabilen Zustand der Energiewandlereinrichtung zugeordnet ist. Eine solche Ausführungsform bietet den Vorteil, dass durch geringfügige konstruktive Anpassung der Umschaltmittel eine einmalige oder insbesondere zweimalige oder mehrmalige Aktivierung der Energiewandlereinrichtung pro Schaltvorgang bzw. Betätigungsvorgang ermöglicht wird.

Dabei kann die Schaltvorrichtung zumindest eine Laufrolle oder ein Gleitelement aufweisen, die bzw. das mit dem beweglichen Schlitten und zusätzlich oder alternativ mit dem zumindest einen Schlittenhebel mechanisch koppelbar ist. Eine solche Ausführungsform bietet den Vorteil, dass eine Bewegung des Schlittens zwischen der ersten Position und der zweiten Position erleichtert und zuverlässiger gemacht werden kann. Bei dem Gleitelement kann es sich beispielsweise um eine Gleitplatte mit einer Gleitfläche handeln. Alternativ dazu könnte anstelle der Gleitplatte ein Gleitblock verwendet werden. Wesentlich für das Gleitelement ist eine Gleitfläche, mittels welcher mit Blick auf den Schlitten eine reibwiderstandsreduzierte Gleitbewegung des Schlittens ermöglicht wird. Die Gleitfläche kann dabei optimiert dimensioniert sein. Mit anderen Worten ist ein Ausmaß der Gleitfläche in Abhängigkeit der gewünschten reibwiderstandreduzierten Gleitbewegung frei wählbar. Die Gleitfläche kann weiter bevorzugt eine reibwiderstandsreduzierende Beschichtung aufweisen.

Gemäß einer Ausführungsform können dabei die Umschaltmittel elastische Mittel aufweisen, die ausgebildet sind, um auf den beweglichen Schlitten zu wirken, um den beweglichen Schlitten von der zweiten Position in die erste Position zu bewegen. Hierbei können die Umschaltmittel den beweglichen Schlitten, einen Schlittenhebel und die elastische Mittel aufweisen. Dabei können die Betätigungsmittel einen Hebel oder Einzelhebel bzw. ein Hebelelement aufweisen. Der Schlittenhebel kann angeordnet und ausgebildet sein, um aufgrund der mechanischen Energie durch den Hebel bzw. Einzelhebel betätigt zu werden. Hierbei ist der bewegliche Schlitten durch den betätigten Schlittenhebel von der ersten in die zweite Position bewegbar, wobei die elastischen Mittel komprimiert werden können, wobei eine Energie für eine Rückbewegung des beweglichen Schlittens von der zweiten Position in die erste Position in den elastischen Mitteln aufgebaut werden kann. Somit können die Umschaltmittel hierbei ausgebildet sein, um zu bewirken, dass die Energiewandlereinrichtung bei einem Schaltvorgang zwei elektrische Energieimpulse erzeugt. Eine solche Ausführungsform bietet den Vorteil, dass ein Einwegemodul, bei dem der Funktaster für eine einzige Betätigungsbewegung vorgesehen ist, als Betätigungskonzept bei geringer Betätigungskraft und hoher Ausbeute an elektrischer Energie in zwei Impulsen auf einfache und kostengünstige Weise realisiert werden kann.

Alternativ können die Umschaltmittel elastische Mittel und zwei Schlittenhebel aufweisen. Dabei können die elastischen Mittel ausgebildet sein, um die Schlittenhebel in eine Ruhestellung vorzuspannen, wobei der bewegliche Schlitten zwischen den Schlittenhebeln anordenbar ist. Hierbei kann ein erster der Schlittenhebel ausgebildet sein, um den beweglichen Schlitten von der ersten Position in die zweite Position zu bewegen, wobei ein zweiter der Schlittenhebel ausgebildet sein kann, um den beweglichen Schlitten von der zweiten Position in die erste Position zu bewegen. Dabei können die Betätigungsmittel einen Doppelhebel bzw. zwei Hebel oder Hebelelemente aufweisen. Die Schlittenhebel können angeordnet und ausgebildet sein, sodass bei einem Schaltvorgang einer der Schlittenhebel aufgrund der mechanischen Energie durch einen der Hebel der Betätigungsmittel betätigt wird. Somit können die Umschaltmittel hierbei ausgebildet sein, um zu bewirken, dass die Energiewandlereinrichtung bei einem Schaltvorgang lediglich einen elektrischen Energieimpuls erzeugt. Eine solche Ausführungsform bietet den Vorteil, dass ein Zweiwegemodul, bei dem der Funktaster für eine unterschiedliche Betätigungsbewegungen vorgesehen ist, als Betätigungskonzept bei geringer Betätigungskraft und hoher Ausbeute an elektrischer Energie in einem einzigen Impuls pro Schaltvorgang auf einfache und kostengünstige Weise realisiert werden kann.

Zudem kann die Schaltvorrichtung zumindest eine Rückstellfeder aufweisen, die ausgebildet ist, um die Betätigungsmittel in eine Ruhestellung vorzuspannen. Die Betätigungsmittel sind ausgebildet, um bei Abwesenheit einer mechanischen Energie eines Schaltvorgangs bzw. bei Abwesenheit einer Betätigungskraft in der Ruhestellung angeordnet zu sein. Somit kann für Betätigungsvorgänge eine definierte Ausgangsstellung geschaffen sein.

Die vorliegende Erfindung betrifft auch einen Funktaster mit
einer Ausführungsform der vorstehend genannten Schaltvorrichtung;
einer Energiewandlereinrichtung, die mit den Umschaltmitteln der Schaltvorrichtung mechanisch koppelbar ist und ausgebildet ist, um die bei dem Schaltvorgang in die Schaltvorrichtung einleitbare mechanische Energie in die elektrische Energie zum Aussenden des Schaltsignals zu wandeln;
einem Schaltungsträger mit einer Signalausgabeeinrichtung zum Aussenden des Schaltsignals, wobei der Schaltungsträger elektrisch leitfähig mit der Energiewandlereinrichtung verbindbar ist;
einem Gehäuse mit zumindest einem Gehäuseelement, wobei das Gehäuse zum Aufnehmen der Schaltvorrichtung, der Energiewandlereinrichtung und des Schaltungsträgers ausgebildet ist; und
einer Taste zum Übertragen der mechanischen Energie auf die Betätigungsmittel der Schaltvorrichtung, wobei die Taste an dem Gehäuse anbringbar ist.

In Verbindung mit dem Funktaster kann eine Ausführungsform der oben genannten Schaltvorrichtung vorteilhaft eingesetzt bzw. verwendet werden, um insbesondere die Energiewandlereinrichtung zu aktivieren. Das Gehäuse kann ausgebildet sein, um eine Wandmontage über Putz oder eine sonstige Oberflächenmontage des Funktasters in einem Gebäude oder dergleichen zu ermöglichen. Der Schaltungsträger kann eine Leiterplatte, eine gedruckte Schaltungsplatine oder dergleichen aufweisen. Dabei kann der Schaltungsträger zwischen der Energiewandlereinrichtung und der Taste anordenbar oder angeordnet sein. Die Signalausgabeeinrichtung kann an dem Schaltungsträger mittels in der Halbleitertechnik üblicher Verfahren aufgebracht sein. Die Signalausgabeeinrichtung kann eine Antenneneinrichtung aufweisen, insbesondere eine auf den Schaltungsträger aufgedruckte Antenneneinrichtung. Die Signalausgabeeinrichtung kann ausgebildet sein, um das Schaltsignal per Funk an eine Schnittstelle zu einem Steuergerät und zusätzlich oder alternativ zu mindestens einem ansteuerbaren Gerät auszugeben. Eine elektrische Kontaktierung zwischen dem Schaltungsträger und der Energiewandlereinrichtung kann z. B. mittels an dem Schaltungsträger ausgeformten SMD-Federkontakten realisiert werden, die elektrisch leitfähig mit einer Leiterplatte verbindbar sind, die mit Kontaktstellen der Energiewandlereinrichtung verlötet ist. Alternativ kann der Schaltungsträger ein umspritztes Stanzgitter mit Federkontakten aufweisen. Dadurch können die Leiterplatte und damit verbundene Lötkosten entfallen. Dies kann einen weiteren Kostenvorteil bringen und eine Zuverlässigkeit der Kontaktierung erhöhen.

Gemäß einer Ausführungsform kann die Signalausgabeeinrichtung eine Funkelektronik zum Erzeugen und Aussenden eines Funksignals aufweisen. Das Funksignal kann dabei die Erfordernisse eines vorbestimmten Funkprotokolls erfüllen. Dabei kann der Schaltungsträger zumindest einen Codierkontakt aufweisen, der bei dem Schaltvorgang betätigbar ist, um ein Codiersignal bereitzustellen. Das Codiersignal ist beispielsweise an die Funkelektronik übermittelbar, wobei die Funkelektronik ausgebildet ist, basierend auf dem Codiersignal ein für ein vorbestimmtes Funkprotokoll geeignetes Funksignal zu erzeugen und auszusenden, wobei das Funksignal die dem Codiersignal zugrundeliegende Angaben repräsentieren kann. Die Signalausgabeeinrichtung und der zumindest eine Codierkontakt können an unterschiedlichen Hauptoberflächen des Schaltungsträgers angeordnet sein. Auch kann der Schaltungsträger zumindest eine elektrische Schaltung aufweisen, die mit den Codierkontakten, der Signalausgabeeinrichtung und der Energiewandlereinrichtung elektrisch verbunden ist. Beispielsweise kann die Funkelektronik austauschbar ausgeführt sein. Hierbei kann auch der Schaltungsträger mit einer ersten Funkelektronik durch einen Schaltungsträger mit einer zweiten Funkelektronik ersetzbar sein, die sich von der ersten Funkelektronik unterscheidet. Die Codierkontakte können ausgebildet sein, um bei einer Kontaktierung durch die Betätigungsmittel oder die Taste bei einem Schaltvorgang das Bereitstellen des Codiersignals zu ermöglichen. Der Schaltungsträger kann dazu eine elektrische Codierschaltung aufweisen, die mit den Codierkontakten elektrisch verbunden und ausgebildet ist, um abhängig davon, welcher der Codierkontakte von den Betätigungsmitteln oder der Taste kontaktiert ist, ein individuelles Codiersignal zu erzeugen. Das Codiersignal kann Angaben dahin gehend repräsentieren, welcher der Codierkontakte von den Betätigungsmitteln oder der Taste kontaktiert ist. Dabei können die Betätigungsmittel ausgebildet sein, um die Umschaltmittel zu betätigen, während zumindest einer der Codierkontakte kontaktiert wird. Eine solche Ausführungsform bietet den Vorteil, dass der Funktaster durch Austausch der Funkelektronik nicht nur gemäß dem KNX-RF-Protokoll, sondern gemäß anderen Funkprotokollen in verschiedenen Funkbändern, z. B. 868MHz, 915MHz, 2,4GHz usw., betreibbar und somit sehr flexibel einsetzbar sein kann.

Insbesondere können die Betätigungsmittel oder kann der Funktaster zum Kontaktieren des mindestens einen Codierkontakts eine Schaltfolie mit einer Mehrzahl von Schaltvorsprüngen aufweisen. Die Schaltfolie kann aus einem elastisch verformbaren Material ausgeformt sein. Die Schaltvorsprünge können in Gestalt von Schaltpillen, Schaltnoppen oder dergleichen ausgeformt und an einer Hauptoberfläche der Schaltfolie angeordnet sein. Die Schaltfolie kann zwischen der Taste und dem Schaltungsträger anordenbar oder angeordnet sein. Die Taste kann oder die Betätigungsmittel können ausgebildet sein, um die Codierkontakte bei einem Schaltvorgang mittels der Schaltfolie zu betätigen. Bei einem Schaltvorgang können die Schaltvorsprünge unabhängig voneinander oder gemeinsam in eine Codierstellung bewegbar sein. Dabei können Anordnung und Anzahl von Schaltvorsprüngen jenen der Codierkontakte entsprechen.

Auch kann die Taste als eine Wippe, eine Doppelwippe oder eine Mehrfachwippe ausgeformt sein. Eine solche Ausführungsform bietet den Vorteil, dass unterschiedliche Bedienkonzepte für unterschiedliche zu schaltende Geräte durch Auswahl einer geeigneten Taste sowie geeignete Variantenwahl der Umschaltmittel der Schaltvorrichtung realisierbar sind.

Ferner kann das Gehäuse zumindest teilweise aus einem Schallentkopplungsmaterial zum Reduzieren eines Betätigungsgeräuschs ausgeformt sein. Zusätzlich oder alternativ kann der Funktaster eine Schallentkopplungskapsel zur Schalldämmung für die Energiewandlereinrichtung aufweisen. Das Schallentkopplungsmaterial kann ein Material mit einer Elastizität aufweisen, die höher ist als eine Elastizität eines Gehäusematerials. Somit kann das Gehäuse ein Zweikomponenten-Gehäuse aus einem Hartmaterial und einem Weichmaterial aufweisen. Die Schallentkopplungskapsel kann aus dem Schallentkopplungsmaterial ausgeformt sein. Beispielsweise kann die Energiewandlereinrichtung mittels einer Gummi-Kapsel als Schallentkopplungskapsel von Gehäuseteilen bezogen auf eine Schwingungsausbreitung isoliert sein. Eine solche Ausführungsform bietet den Vorteil, dass eine weitere Geräuschpegelreduzierung erreicht werden kann.

Die vorliegende Erfindung betrifft ferner ein Verfahren zum Erzeugen eines Schaltsignals eines Funktasters, wobei das Verfahren in Verbindung mit einem Funktaster ausführbar ist, der eine Schaltvorrichtung, eine Energiewandlereinrichtung zum Wandeln mechanischer Energie in elektrische Energie und einen Schaltungsträger mit einer Signalausgabeeinrichtung aufweist, wobei der Schaltungsträger elektrisch leitfähig mit der Energiewandlereinrichtung verbunden ist, wobei das Verfahren folgende Schritte aufweist:
Generieren zumindest eines elektrischen Energieimpulses zum Aussenden des Schaltsignals mittels der Schaltvorrichtung und der Energiewandlereinrichtung unter Verwendung einer bei einem Schaltvorgang in die Schaltvorrichtung eingeleiteten mechanischen Energie, wobei die mechanische Energie von Betätigungsmitteln der Schaltvorrichtung aufgenommen und von mit den Betätigungsmitteln und mit der Energiewandlereinrichtung mechanisch gekoppelten Umschaltmitteln auf die Energiewandlereinrichtung übertragen wird, wobei die Umschaltmittel bei dem Schaltvorgang durch die Betätigungsmittel betätigt werden, um zum Generieren des zumindest einen elektrischen Energieimpulses die Energiewandlereinrichtung mindestens von einem ersten stabilen Zustand in einen zu dem ersten stabilen Zustand unterschiedlichen, zweiten stabilen Zustand zu versetzen; und
Ausgeben des Schaltsignals per Funk mittels der Signalausgabeeinrichtung unter Verwendung des zumindest einen elektrischen Energieimpulses.

Das Verfahren kann vorteilhaft ausgeführt werden, um in Verbindung mit dem vorstehend genannten Funktaster bzw. in Verbindung mit der vorstehend genannten Schaltvorrichtung ein Schaltsignal zu erzeugen.

Vorteilhafterweise kann gemäß Ausführungsformen der vorliegenden Erfindung beispielsweise unter Verwendung der Schaltvorrichtung der Schalter bzw. Funktaster im KNX-RF-Funknetz eingesetzt werden, da eine hohe Energieausbeute des Energiewandlers sowie ein bidirektionaler Funkbetrieb ermöglicht werden. Der Funktaster kann beim Betätigen und zusätzlich oder alternativ beim Loslassen je einen Energiepuls erzeugen und je ein Funktelegram versenden. Diese Variante kann einen Vorteil beim Einsatz mit Dimmer oder beim Steuern von Rollos oder Jalousien bieten. Für Anwendungsfälle, bei denen der zweite Energiepuls und das zweite Funktelegram beim Loslassen der Taste nicht notwendig sind, kann die Schaltvorrichtung ausgebildet sein, um beim Betätigen und Loslassen des Funktasters lediglich die Erzeugung eines Energiepulses zu bewirken, unnötigen Kraftaufwand und störende Geräusche zu vermeiden. Gemäß Ausführungsformen der vorliegenden Erfindung kann somit eine Verbesserung von Akustik, Haptik und Geräuschentwicklung des Funktasters erreicht werden.

Somit kann gemäß Ausführungsformen der vorliegenden Erfindung ein autarkes Schaltmodul bzw. ein autarker Funktaster für eine universelle Verwendung im KNX-RF/KNX-RF-ready-Netz bereitgestellt werden. Es kann eine Verwendung anderer bzw. kundenspezifischer Funkprotokolle und freier Funkbänder ermöglicht werden. Auch können eine Betätigungskraft und ein Betätigungsgeräusch verringert werden und eine Haptik verbessert werden, beispielsweise analog zu drahtgebundenen Lichtschaltern gestaltet. Es kann eine Eignung des Funktasters zur Ansteuerung von Lichtquellen mit Dimmer und ohne Dimmer sowie zur Steuerung von Jalousie- und Rolloantrieben erreicht werden. Ferner kann zumindest während einer Konfigurierung bzw. Einlernphase des Funktasters ein bidirektionaler Funkbetrieb ermöglicht werden. Die Schaltvorrichtung kann ausgebildet sein, um ähnlich einem Baukasten bzw. Varianten-Baukasten für zwei Bedienkonzepte umbaubar zu sein, wobei eine Realisierbarkeit als Zweiwegemodul oder Einwegmodul vorgesehen sein kann, wobei beide Konzepte mit lediglich moderatem Umbau realisiert werden können. Somit kann ein Einsatz mit einfacher Taste oder mit Doppeltaste bzw. mit Schalter oder mit Doppelschalter ermöglicht werden.

Die Erfindung wird anhand der beigefügten Zeichnungen beispielhaft näher erläutert. Es zeigen:
- Fig. 1: eine schematische Darstellung eines Funktasters gemäß einem Ausführungsbeispiel der vorliegenden Erfindung;
- Fig. 2: ein Ablaufdiagramm eines Verfahrens zum Erzeugen eines Schaltsignals gemäß einem Ausführungsbeispiel der vorliegenden Erfindung;
- Fig. 3: eine perspektivische Darstellung eines Funktasters gemäß einem Ausführungsbeispiel der vorliegenden Erfindung;
- Fig. 4: eine perspektivische Explosionsdarstellung des Funktasters aus Fig. 3;
- Fig. 5: eine perspektivische Darstellung von Betätigungsmitteln der Schaltvorrichtung des Funktasters aus Fig. 3 bis Fig. 4;
- Fig. 6: eine perspektivische Teilexplosionsdarstellung des Funktasters aus Fig. 3 bis Fig. 4;
- Fig. 7: eine perspektivische Darstellung einer Energiewandlereinrichtung sowie von Umschaltmitteln der Schaltvorrichtung des Funktasters aus Fig. 3, Fig. 4 und Fig. 6;
- Fig. 8: eine perspektivische Darstellung eines Schaltungsträgers des Funktasters aus Fig. 3, Fig. 4 und Fig. 6;
- Fig. 9A bis 9E: Schnittdarstellungen des Funktasters aus Fig. 3, Fig. 4 und Fig. 6 in unterschiedlichen Zuständen bei Schaltvorgängen;
- Fig. 10: eine perspektivische Darstellung eines Funktasters gemäß einem weiteren Ausführungsbeispiel der vorliegenden Erfindung;
- Fig. 11: eine perspektivische Explosionsdarstellung des Funktasters aus Fig. 10;
- Fig. 12A bis 12D: Schnittdarstellungen und Draufsichten des Funktasters aus Fig. 10 bis Fig. 11 in unterschiedlichen Zuständen bei einem Schaltvorgang; und
- Fig. 13 und 14: perspektivische Darstellungen einer Energiewandlereinrichtung sowie eines Schaltungsträgers des Funktasters aus Fig. 3, Fig. 4, Fig. 6 und Figuren 9A bis 9E bzw. Fig. 10, Fig. 11 und Figuren 12A bis 12D gemäß Ausführungsbeispielen der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

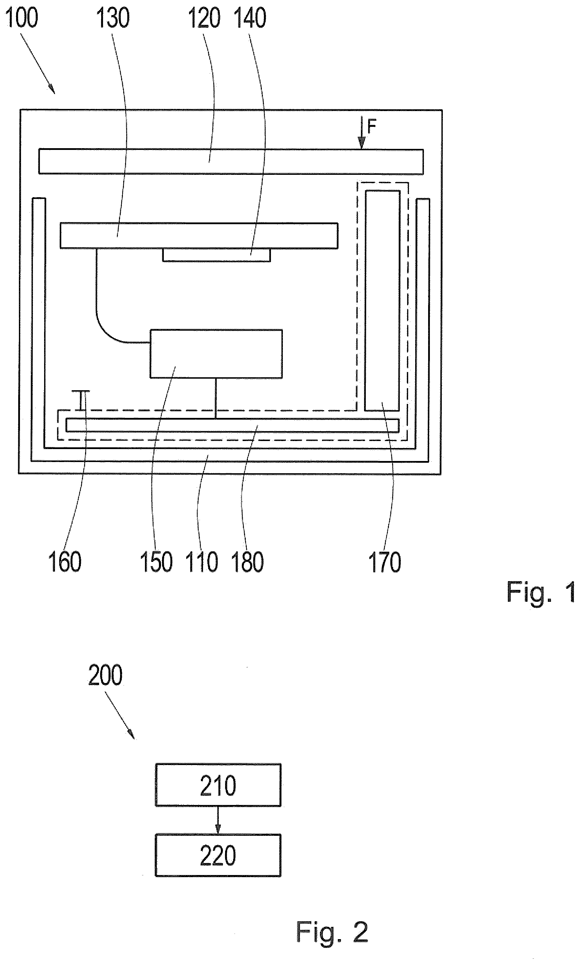

Fig. 1 zeigt eine schematische Darstellung eines Funktasters 100 gemäß einem Ausführungsbeispiel der vorliegenden Erfindung. Gezeigt sind in der Darstellung von Fig. 1 von dem Funktaster 100 hierbei ein Gehäuse 110, eine Taste 120, ein Schaltungsträger 130, eine Signalausgabeeinrichtung 140, eine Energiewandlereinrichtung 150, eine Schaltvorrichtung 160, Betätigungsmittel 170 und Umschaltmittel 180. Ferner ist eine Betätigungskraft F symbolisch durch einen Pfeil auf die Taste 120 dargestellt, wobei die Betätigungskraft F eine mechanische Energie bei einem Schaltvorgang repräsentiert.

Gemäß dem in Fig. 1 dargestellten Ausführungsbeispiel der vorliegenden Erfindung weist das Gehäuse 110 ein Gehäuseelement auf. Gemäß einem anderen Ausführungsbeispiel kann das Gehäuse 110 auch zwei oder mehr Gehäuseelemente aufweisen. In dem Gehäuse 110 sind der Schaltungsträger 130, die Signalausgabeeinrichtung 140, die Energiewandlereinrichtung 150 und die Schaltvorrichtung 160 aufgenommen. Dabei ist die Signalausgabeeinrichtung 140 an dem Schaltungsträger 130 angeordnet. Die Schaltvorrichtung 160 weist die Betätigungsmittel 170 und die Umschaltmittel 180 auf.

Die Taste 120 ist an dem Gehäuse 110 anbringbar bzw. bei Betrieb des Funktasters 100 angebracht, auch wenn dies in Fig. 1 nicht explizit dargestellt ist. Die Taste 120 ist angeordnet, um durch die Betätigungskraft F bewegbar zu sein, um die Betätigungsmittel 170 der Schaltvorrichtung 160 zu kontaktieren und mechanische Energie zu übertragen. Die Taste 120 ist ausgebildet, um mechanische Energie der Betätigungskraft F auf die Betätigungsmittel 170 der Schaltvorrichtung 160 zu übertragen.

Die Betätigungsmittel 170 der Schaltvorrichtung 160 sind ausgebildet, um die bei einem Schaltvorgang über die Taste 120 in die Schaltvorrichtung 160 einleitbare mechanische Energie aufzunehmen. Ferner sind die Betätigungsmittel 170 angeordnet und ausgebildet, um ansprechend auf die aufgenommene mechanische Energie die Umschaltmittel 180 zu betätigen. Die Umschaltmittel 180 sind mit den Betätigungsmitteln 170 mechanisch koppelbar bzw. durch die Betätigungsmittel 170 betätigbar. Ferner sind die Umschaltmittel 180 mit der Energiewandlereinrichtung 150 mechanisch gekoppelt. Die Umschaltmittel 180 sind ausgebildet, um die mechanische Energie von den Betätigungsmitteln 170 auf die Energiewandlereinrichtung 150 zu übertragen.

Die Energiewandlereinrichtung 150 ist mit den Umschaltmitteln 180 der Schaltvorrichtung 160 mechanisch gekoppelt. Ferner ist die Energiewandlereinrichtung 150 ausgebildet, um die bei dem Schaltvorgang in die Schaltvorrichtung 160 einleitbare mechanische Energie in eine elektrische Energie zum Aussenden eines Schaltsignals zu wandeln.

Die Umschaltmittel 180 sind ausgebildet, um bei dem Schaltvorgang durch die Betätigungsmittel 170 betätigbar zu sein, um die Energiewandlereinrichtung 150 mindestens von einem ersten stabilen Zustand in einen zu dem ersten stabilen Zustand unterschiedlichen, zweiten stabilen Zustand zu versetzen, um zumindest einen elektrischen Energieimpuls zu erzeugen.

Der Schaltungsträger 130 mit der Signalausgabeeinrichtung 140 ist zwischen der Energiewandlereinrichtung 150 und der Taste 120 angeordnet. Der Schaltungsträger 130 ist elektrisch leitfähig mit der Energiewandlereinrichtung 150 verbunden. Die Signalausgabeeinrichtung 140 ist an einer der Energiewandlereinrichtung 150 zugewandten Hauptoberfläche des Schaltungsträgers 130 angeordnet. Dabei ist die Signalausgabeeinrichtung 140 ausgebildet, um das Schaltsignal auszusenden bzw. auszugeben.

Gemäß einem Ausführungsbeispiel können die Umschaltmittel 180 der Schaltvorrichtung 160 einen mit der Energiewandlereinrichtung 150 mechanisch gekoppelten, beweglichen Schlitten und zumindest einen mittels der Betätigungsmittel 170 betätigbaren Schlittenhebel aufweisen. Dabei kann der zumindest eine Schlittenhebel ausgebildet sein, um den beweglichen Schlitten zwischen einer ersten Position, die dem ersten stabilen Zustand der Energiewandlereinrichtung 150 zugeordnet ist, und einer zweiten Position zu bewegen, die dem zweiten stabilen Zustand der Energiewandlereinrichtung 150 zugeordnet ist. Auch können die Umschaltmittel 180 hierbei zumindest eine Laufrolle aufweisen, die mit dem beweglichen Schlitten und zusätzlich oder alternativ mit dem zumindest einen Schlittenhebel mechanisch gekoppelt sein kann. In einer Variante können die Umschaltmittel 180 hierbei elastische Mittel aufweisen, die ausgebildet sein können, um auf den beweglichen Schlitten zu wirken, um den beweglichen Schlitten von der zweiten Position in die erste Position zu bewegen. In einer anderen Variante können die Umschaltmittel 180 dabei elastische Mittel und zwei Schlittenhebel aufweisen. Hierbei können die elastischen Mittel ausgebildet sein, um die Schlittenhebel in eine Ruhestellung vorzuspannen, wobei der bewegliche Schlitten zwischen den Schlittenhebeln angeordnet sein kann. Ein erster der Schlittenhebel kann ausgebildet sein, um den beweglichen Schlitten von der ersten Position in die zweite Position zu bewegen, wobei ein zweiter der Schlittenhebel ausgebildet sein kann, um den beweglichen Schlitten von der zweiten Position in die erste Position zu bewegen.

Gemäß einem Ausführungsbeispiel kann die Signalausgabeeinrichtung 140 eine austauschbare Funkelektronik aufweisen. Auch kann gemäß einem Ausführungsbeispiel der Schaltungsträger 130 zumindest einen Codierkontakt aufweisen, der bei dem Schaltvorgang betätigbar ist, um ein Codiersignal bereitzustellen. Die Taste 120 kann optional als eine Wippe, eine Doppelwippe oder eine Mehrfachwippe ausgeformt sein. Ferner kann gemäß einem Ausführungsbeispiel das Gehäuse 110 zumindest teilweise aus einem Schallentkopplungsmaterial zum Reduzieren eines Betätigungsgeräuschs ausgeformt sein. Zusätzlich oder alternativ kann der Funktaster 100 eine Schallentkopplungskapsel zur Schalldämmung für die Energiewandlereinrichtung 150 aufweisen.

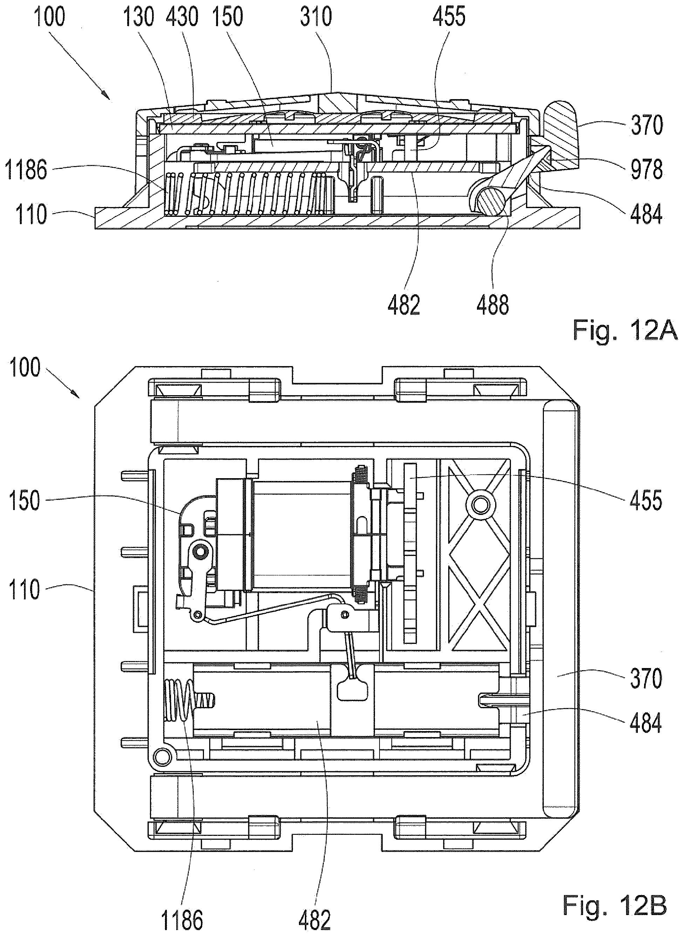

Fig. 2 zeigt ein Ablaufdiagramm eines Verfahrens 200 zum Erzeugen eines Schaltsignals eines Funktasters gemäß einem Ausführungsbeispiel der vorliegenden Erfindung. Das Verfahren 200 ist dabei in Verbindung mit einem Funktaster ausführbar, der eine Schaltvorrichtung, eine Energiewandlereinrichtung zum Wandeln mechanischer Energie in elektrische Energie und einen elektrisch leitfähig mit der Energiewandlereinrichtung verbundenen Schaltungsträger mit einer Signalausgabeeinrichtung aufweist. Insbesondere ist das Verfahren 200 in Verbindung mit dem Funktaster aus Fig. 1, Fig. 3, Fig. 4, Fig. 6, Figuren 9A bis 9E, Fig. 10, Fig. 11 und/oder Figuren 12A bis 12D ausführbar.

Das Verfahren 200 weist einen Schritt 210 des Generierens zumindest eines elektrischen Energieimpulses zum Aussenden des Schaltsignals mittels der Schaltvorrichtung und der Energiewandlereinrichtung unter Verwendung einer bei einem Schaltvorgang in die Schaltvorrichtung eingeleiteten mechanischen Energie auf. Hierbei wird die mechanische Energie von Betätigungsmitteln der Schaltvorrichtung aufgenommen und von mit den Betätigungsmitteln und mit der Energiewandlereinrichtung mechanisch gekoppelten Umschaltmitteln auf die Energiewandlereinrichtung übertragen. Dabei werden die Umschaltmittel bei dem Schaltvorgang durch die Betätigungsmittel betätigt, um zum Generieren des zumindest einen elektrischen Energieimpulses die Energiewandlereinrichtung mindestens von einem ersten stabilen Zustand in einen zu dem ersten stabilen Zustand unterschiedlichen, zweiten stabilen Zustand zu versetzen. Auch weist das Verfahren 200 einen Schritt 220 des Ausgebens des Schaltsignals per Funk mittels der Signalausgabeeinrichtung unter Verwendung des zumindest einen elektrischen Energieimpuls auf.

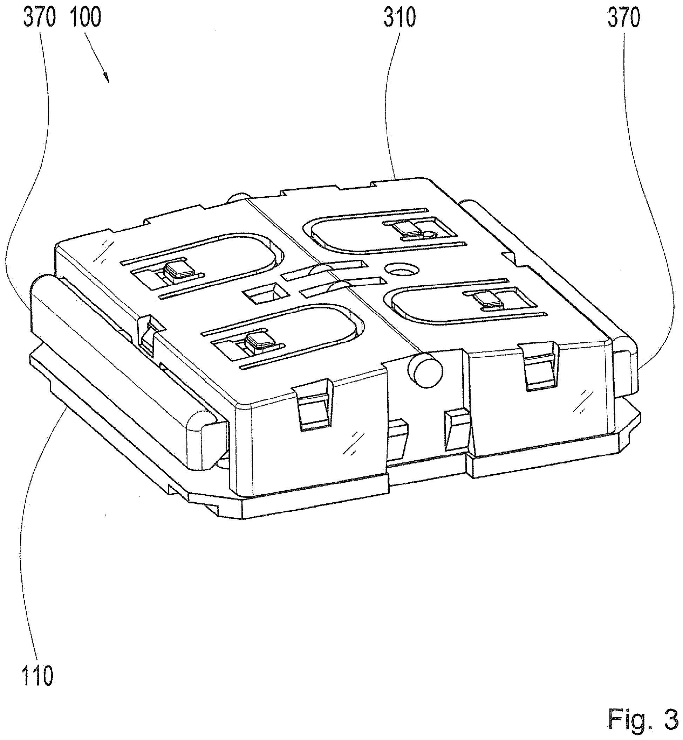

Fig. 3 zeigt eine perspektivische Darstellung eines Funktasters 100 gemäß einem Ausführungsbeispiel der vorliegenden Erfindung. Gezeigt sind von dem Funktaster 100 hierbei ein Gehäuse 110 bzw. Gehäuseboden, ein Deckel 310 bzw. Gehäusedeckel sowie zwei Betätigungshebel 370. Bei dem Funktaster 100 handelt es sich um einen Funktaster wie beispielsweise den Funktaster aus Fig. 1, wobei der Funktaster 100 in Fig. 3 ohne Taste, jedoch mit dem Deckel 310 dargestellt ist, wobei die Betätigungshebel 370 die Betätigungsmittel repräsentieren. Hierbei ist der Funktaster 100 in einem zusammengefügten Zustand ohne Taste gezeigt. Ein Gesamtgehäuse des Funktasters 100 weist hierbei zwei Gehäuseelemente auf, das Gehäuse 110 und den Deckel 310. Die Betätigungshebel 370 ragen teilweise aus dem Gehäuse 110 und dem Deckel 310 hervor. Hierbei sind die Betätigungsmittel als die Betätigungshebel 370 ausgeformt.

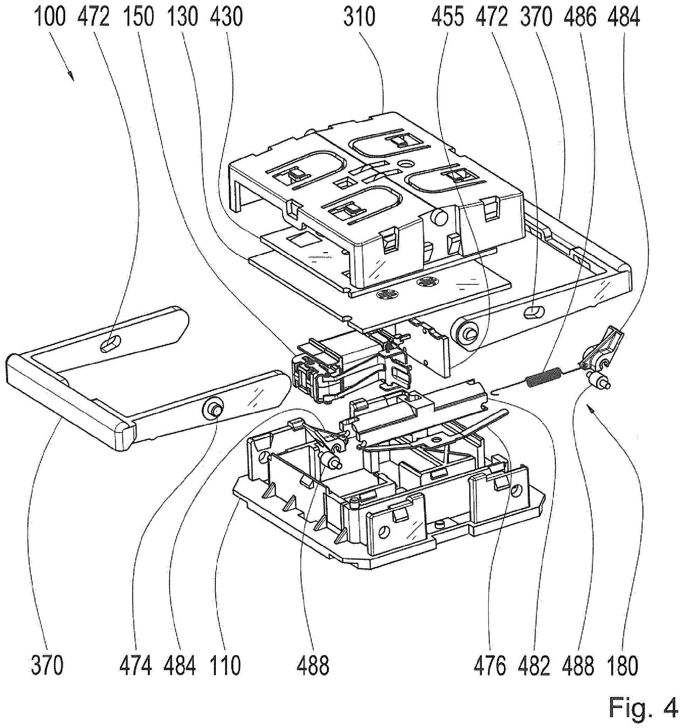

Fig. 4 zeigt eine perspektivische Explosionsdarstellung des Funktasters aus Fig. 3. Gezeigt sind von dem Funktaster 100 dabei das Gehäuse 110, der Schaltungsträger 130, die Energiewandlereinrichtung 150 bzw. ein bistabiler Energiewandler, die Umschaltmittel 180, der Deckel 310, Betätigungsmittel in Gestalt der zwei Betätigungshebel 370 bzw. eines Zwillingshebels, eine Schaltmatte bzw. Schaltfolie 430, eine Kontaktplatte bzw. Hilfsleiterplatte 455, zwei Langlöcher 472, darstellungsbedingt lediglich einer von zwei Zapfen 474, eine Rückstellfeder 476, ein beweglicher Schlitten 482, zwei Schlittenhebel 484, eine Zugfeder 486 und zwei Laufrollen 488.

Die Betätigungshebel 370 sind an dem Gehäuse 110 anbringbar. Jeder der Betätigungshebel 370 weist ein Langloch 472 und einen Zapfen 474 auf. Hierbei ist darstellungsbedingt lediglich einer der Zapfen 474 in Fig. 4 erkennbar. Die Betätigungshebel 370 fungieren als ein Zwillingshebel. Ferner weisen die Betätigungsmittel die Rückstellfeder 476 auf. Die Rückstellfeder 476 ist ausgebildet, um die Betätigungshebel 370 in eine Ruheposition vorzusparen und bei einem Schaltvorgang eine Gegenkraft entgegen einer Betätigungskraft auf die Betätigungshebel 370 auszuüben. Somit weisen die Betätigungsmittel die Betätigungshebel 370 mit den Langlöchern 472 sowie den Zapfen 474 und die Rückstellfeder 476 auf.

Die Schaltfolie 430 ist zwischen dem Deckel 310 und dem Schaltungsträger 130 angeordnet. Die Hilfsleiterplatte 455 ist mit der Energiewandlereinrichtung 150 elektrisch und mechanisch verbindbar und ist benachbart zu der Energiewandlereinrichtung 150 angeordnet. Die Energiewandlereinrichtung 150 ist mittels der Hilfsleiterplatte 455 elektrisch leitfähig mit dem Schaltungsträger 130 verbindbar.

Die Umschaltmittel 180 weisen den beweglichen Schlitten 482, die Schlittenhebel 484, die Zugfeder 486 und die Laufrolle 488 auf. An jedem der Schlittenhebel 484 ist eine Laufrolle 488 anbringbar. Der bewegliche Schlitten 482 ist zwischen den Schlittenhebeln 484 angeordnet. Die Schlittenhebel 484 sind an gegenüberliegenden Enden des beweglichen Schlittens 482 anbringbar. Die Zugfeder 486 ist mit den Schlittenhebeln 484 mechanisch verbindbar. Dabei ist die Zugfeder 486 in dem beweglichen Schlitten 482 aufnehmbar.

Die Energiewandlereinrichtung 150 mit der Hilfsleiterplatte 455, die Rückstellfeder 476 und die Umschaltmittel 180 sind zwischen dem Schaltungsträger 130 und einem von dem Deckel 310 abgewandt angeordneten Bodenabschnitt des Gehäuses 110 angeordnet.

Das Gehäuse 110 sowie der Deckel 310 sind aus einem Kunststoffmaterial mittels Spritzguss herstellbar und für einen einfachen Spritzwerkzeugaufbau konzipiert. Als Material ist insbesondere ein weicher, geräuschdämpfender Kunststoff verwendbar, um eine Geräuschübertragung von der Energiewandlereinrichtung 150 auf andere Schalterkomponenten des Funktasters 100 zu minimieren.

Als Betätigungsmittel werden die Betätigungshebel 370 bzw. wird ein sogenannter Zwillingshebel verwendet. Beide Betätigungshebel 370 sind so konzipiert, dass zwei gleich ausgeformte Teile verwendet werden. Das ermöglicht eine Senkung von Werkzeugkosten und Teilepreis. Die Betätigungshebel 370 sind zu einer Hebelanordnung anordenbar und in dem Gehäuse 110 drehbar gelagert aufnehmbar. Hierbei sind die Betätigungshebel 370 mittels der Langlöcher 472 und Zapfen 474 miteinander verbindbar, wobei beide Betätigungshebel 370 in Bewegung versetzt werden können, sobald einer der beiden Betätigungshebel mit der Betätigungskraft betätigt bzw. aktiviert wird. Eine Rückstellung der Betätigungshebel 370 erfolgt mittels der Rückstellfeder 476. Als Rückstellfeder 476 ist eine Druckfeder, Zugfeder, Drehfeder oder eine Biegefeder verwendbar. In Fig. 4 ist die Rückstellfeder 476 als eine gestanzte Biegefeder dargestellt. Eine Federkraft der Rückstellfeder 476 ist so wählbar, dass eine zuverlässige Rückstellung der Betätigungshebel 370 sowie einer Taste ermöglicht ist.

Zwischen die Betätigungsmittel bzw. die Betätigungshebel 370 und die Energiewandlereinrichtung 150 sind funktional die Umschaltmittel 180 in Gestalt einer sogenannten Toggle-Mechanik geschaltet. Die Umschaltmittel 180 umfassen insbesondere den beweglichen Schlitten 482, der im Gehäuse 110 gleit- oder rollgelagert aufnehmbar ist und mit einem Betätiger der Energiewandlereinrichtung 150 mechanisch verbindbar ist.

Der Deckel 310 ist beispielsweise aus einem geräuschdämpfenden Kunststoff gefertigt. Das Gehäuse 110 ist mittels des Deckels 310 verschließbar. Der Deckel 310 weist Befestigungselemente und eine Drehlagerung bzw. Drehlagerzapfen für eine Taste auf. Der Schaltungsträger 130 weist eine elektrische Schaltung für Energiemanagement sowie die Signalausgabeeinrichtung mit einer Funkelektronik und einer Antenne auf, auch wenn diese in Fig. 4 nicht explizit gezeigt ist. Der Funktaster 100 kann mit einer Wippe, zwei Wippen oder mehreren Wippen als Taste betrieben werden.

Anders ausgedrückt zeigt Fig. 4 einen Funktaster 100, der als ein Zweiwegemodul ausgeführt ist, welches beim Betätigen bzw. einem Schaltvorgang nur mindestens einen elektrischen Energieimpuls generiert und somit ein Telegramm bzw. Schaltsignal versendet. Hierbei können Betätigungskräfte gespart und ein Geräuschpegel gesenkt werden. Eine Rückstellung einer Taste erfolgt, ohne dass ein Energie- bzw. Funktelegramm erzeugt wird, und somit geräuscharm oder im Wesentlichen für einen Benutzer subjektiv geräuschlos. Beim Betätigen einer Wippe der Taste wird die bistabile Energiewandlereinrichtung 150 in eine Richtung aktiviert. Bei einer erneuten Betätigung der gleichen oder einer beliebigen anderen Wippe der Taste wird die Energiewandlereinrichtung 150 in die andere Richtung aktiviert.

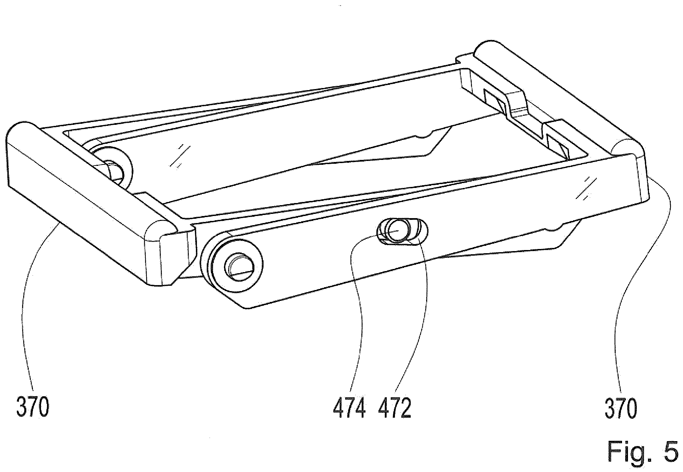

Fig. 5 zeigt eine perspektivische Darstellung von Betätigungsmitteln der Schaltvorrichtung des Funktasters aus Fig. 3 bis Fig. 4. Gezeigt sind die Betätigungshebel 370 sowie darstellungsbedingt lediglich ein Langloch 472 und ein Zapfen 474. Hierbei sind die zwei Betätigungshebel 370 dargestellt, die zu einer Zwillingshebelanordnung zusammengefügt sind. Hierbei ist der Zapfen 474 eines ersten der Betätigungshebel 370 in dem Langloch 472 eines zweiten der Betätigungshebel 370 angeordnet. Ferner ist der Zapfen 474 des zweiten der Betätigungshebel 370 in dem Langloch 472 des ersten der Betätigungshebel 370 angeordnet, auch wenn dies darstellungsbedingt in Fig. 5 nicht explizit erkennbar ist.

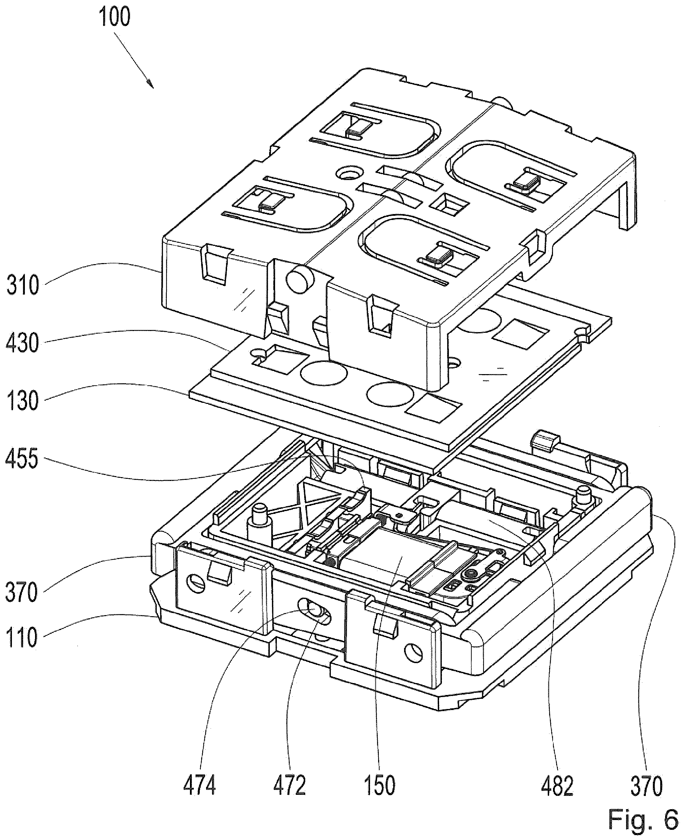

Fig. 6 zeigt eine perspektivische Teilexplosionsdarstellung des Funktasters 100 aus Fig. 3 bis Fig. 4. Anders ausgedrückt ist der Funktaster 100 in einem partiell zusammengefügten Zustand dargestellt. Gezeigt bzw. darstellungsbedingt erkennbar sind von dem Funktaster 100 in Fig. 6 hierbei das Gehäuse 110, der Schaltungsträger 130, die Energiewandlereinrichtung 150, der Deckel 310, die Betätigungshebel 370, die Schaltfolie 430, die Hilfsleiterplatte 455, ein Langloch 472, ein Zapfen 474 und der bewegliche Schlitten 482.

In der Darstellung von Fig. 6 sind die Betätigungshebel 370 zusammengefügt, wie es in Fig. 5 gezeigt ist, sowie an dem Gehäuse 110 angebracht. Ferner sind die Energiewandlereinrichtung 150 und die Hilfsleiterplatte 455 miteinander verbunden sowie in dem Gehäuse 110 angeordnet. Auch sind die Umschaltmittel, von denen lediglich der bewegliche Schlitten 482 in Fig. 6 erkennbar ist, dem Gehäuse 110 angeordnet. Der Schaltungsträger 130, die Schaltfolie 430 und der Deckel 310 sind in einem bezüglich des Gehäuses 110 unmontierten Zustand bzw. von dem Gehäuse 110 entfernt angeordnet gezeigt.

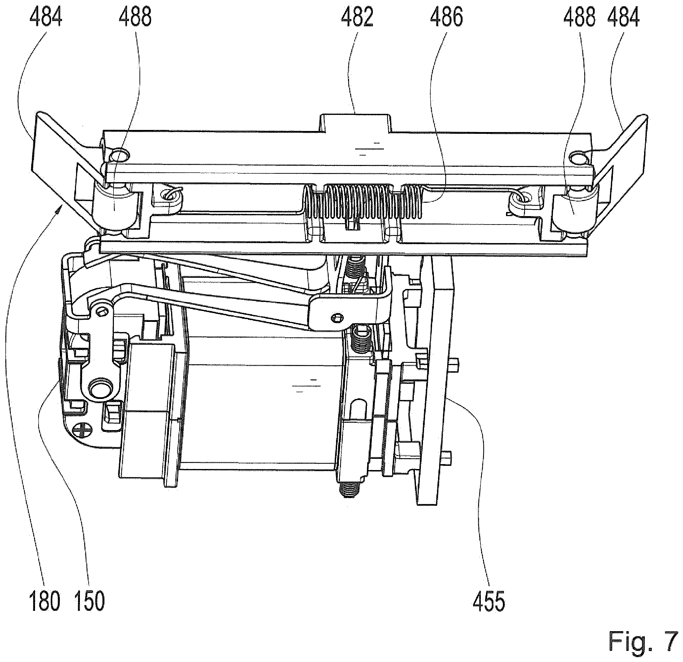

Fig. 7 zeigt eine perspektivische Darstellung der Energiewandlereinrichtung 150 sowie der Umschaltmittel 180 der Schaltvorrichtung des Funktasters aus Fig. 3, Fig. 4 und Fig. 6. Gezeigt sind in Fig. 7 hierbei die Energiewandlereinrichtung 150, die Umschaltmittel 180, die Hilfsleiterplatte 455, der bewegliche Schlitten 482, die Schlittenhebel 484, die Zugfeder 486 und die Laufrollen 488.

In der Darstellung von Fig. 7 ist die Hilfsleiterplatte 455 elektrisch und mechanisch mit der Energiewandlereinrichtung 150 verbunden gezeigt. Ferner ist die Energiewandlereinrichtung 150 mit dem beweglichen Schlitten 482 mechanisch gekoppelt dargestellt. Die Umschaltmittel 180 sind in einem zusammengefügten Zustand gezeigt. Hierbei sind die Schlittenhebel 484 an einander gegenüberliegenden Enden des beweglichen Schlittens 482 angebracht. An jedem der Schlittenhebel 484 ist eine der Laufrolle 488 angebracht. Zwischen den Schlittenhebeln 484 ist die Zugfeder 486 gespannt. Hierbei erstreckt sich die Zugfeder 486 in einem Hohlraum des beweglichen Schlittens 482. Mittels der Zugfeder 486 sind die Schlittenhebel 484 in eine Ruhestellung vorgespannt. Bei einem Schaltvorgang sind die Umschaltmittel 180, insbesondere der bewegliche Schlitten 482, zwischen einer ersten Position und einer zweiten Position relativ zu der Energiewandlereinrichtung 150 bewegbar bzw. verschiebbar.

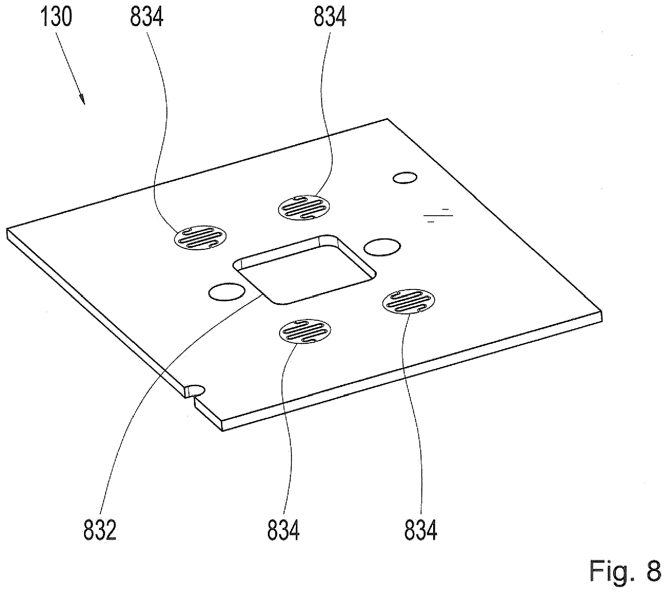

Fig. 8 zeigt eine perspektivische Darstellung des Schaltungsträgers 130 des Funktasters aus Fig. 3, Fig. 4 und Fig. 6. Genauer gesagt ist in Fig. 8 von dem Schaltungsträger 130 insbesondere eine Hauptoberfläche dargestellt, die in einem in dem Funktaster montierten Zustand des Schaltungsträgers 130 der Schaltfolie bzw. dem Deckel zugewandt ist. Gezeigt sind hierbei von dem Schaltungsträger 130 eine beispielhaft mittig angeordnete Durchgangsöffnung 832 sowie lediglich beispielhaft vier Codierkontakte 834. Anordnungspositionen der Codierkontakte 834 repräsentieren hierbei Ecken eines imaginären Rechtecks auf der in Fig. 8 gezeigten Hauptoberfläche des Schaltungsträgers 130.

Auf einer der Energiewandlereinrichtung des Funktasters montierten Zustand zugewandten Hauptoberfläche des Schaltungsträgers 130 kann der Schaltungsträger 130 mit Elektronik-Bauteilen bestückt sein, auch wenn dies in Fig. 8 darstellungsbedingt nicht erkennbar ist. Auf der in Fig. 8 gezeigten Hauptoberfläche des Schaltungsträgers 130 sind die Codierkontakte 834 bzw. Codierschalter oder Kontaktflächen und Kontakte angeordnet und kann eine Antenne aufgedruckt sein. Die Codierkontakte 834 sowie deren Anzahl können beliebig anpassbar sein. Es können beispielsweise Mikroschalter, Schaltmatten, Folienschalter usw. verwendet werden. Der Deckel des Funktasters weist Betätigungselemente zur Aktivierung der Codierkontakte 834 auf.

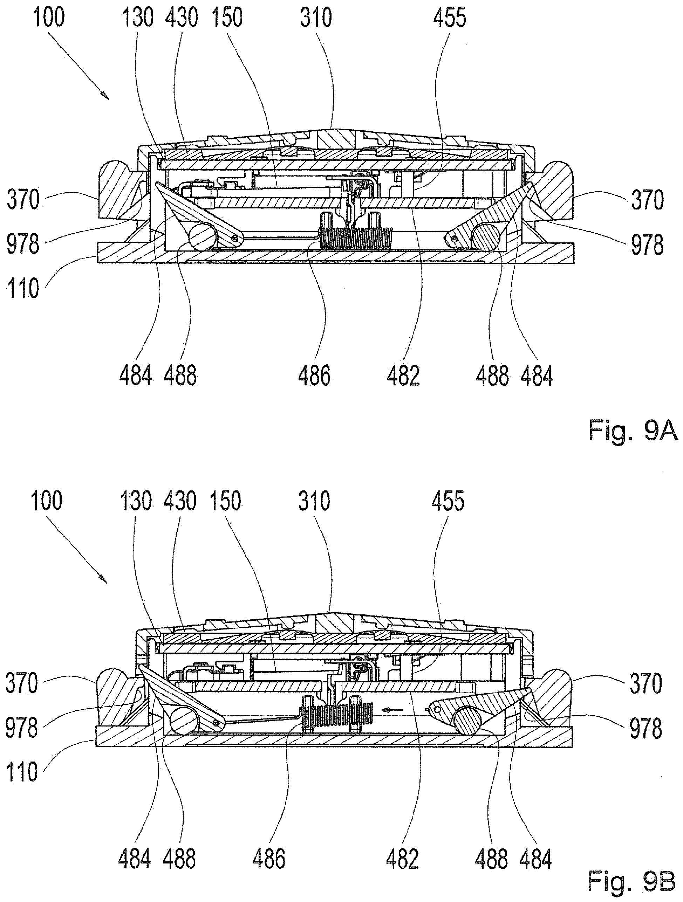

Die Figuren 9A bis 9E zeigen Schnittdarstellungen des Funktasters 100 aus Fig. 3, Fig. 4 und Fig. 6 in unterschiedlichen Zuständen bei Schaltvorgängen. Hierbei ist der Funktaster 100 in unterschiedlichen Schaltphasen sowie in einem zusammengefügten bzw. montierten Zustand dargestellt. Gezeigt bzw. darstellungsbedingt erkennbar sind in den Figuren 9A bis 9E dabei von dem Funktaster 100 jeweils das Gehäuse 110, der Schaltungsträger 130, die Energiewandlereinrichtung 150, der Deckel 310, die Betätigungshebel 370, die Schaltfolie 430, die Hilfsleiterplatte 455, der bewegliche Schlitten 482, die Schlittenhebel 484, die Zugfeder 486, die Laufrollen 488 und zwei Lagerkerben 978. Hierbei ist in jedem der Betätigungshebel 370 eine Lagerkerbe 978 ausgeformt. Jede Lagerkerbe 978 ist ausgebildet, um einen Schlittenhebel 484 in Eingriff zu nehmen. Der Funktaster 100 ist für die Schnittdarstellungen der Figuren 9A bis 9E entlang einer Ebene geschnitten, die sich normal bezüglich einer Bodenplatte des Gehäuses 110 und durch eine Längserstreckungsachse des beweglichen Schlittens 482 sowie der Zugfeder 486 erstreckt.

Fig. 9A zeigt hierbei den Funktaster 100 in einem unbetätigten Zustand bzw. Ruhezustand bei Abwesenheit einer auf denselben ausgeübten Betätigungskraft und somit vor oder nach einem Schaltvorgang. Hierbei sind die Betätigungshebel 370 von der Bodenplatte des Gehäuses 110 beabstandet in ihrer Ruhestellung angeordnet. Die Umschaltmittel, die den beweglichen Schlitten 482, die Schlittenhebel 484, die Zugfeder 486 und die Laufrollen 488 aufweisen, sind hierbei in der Darstellung von Fig. 9A von einer Mittenposition nach rechts innerhalb des Gehäuses 110 versetzt dargestellt. Dabei ist der bewegliche Schlitten 482 beispielsweise in der ersten Position angeordnet. Der in Fig. 9A rechts gezeigte Schlittenhebel 484 ist in Eingriff in der Lagerkerbe 978 des rechts gezeigten Betätigungshebels 370 angeordnet gezeigt. Der in Fig. 9A links gezeigte Schlittenhebel 484 ist außer Eingriff von der Lagerkerbe 978 des links gezeigten Betätigungshebels 370 angeordnet gezeigt. Die Schlittenhebel 484 sind in ihrer Ruhestellung angeordnet.

Fig. 9B zeigt den Funktaster 100 in einem vollständig betätigten Zustand bei einer anliegenden Betätigungskraft während eines Schaltvorgangs. Hierbei sind die Betätigungshebel 370 in Anlage gegen die Bodenplatte des Gehäuses 110 in einer Auslenkungsstellung angeordnet. Die Umschaltmittel sind hierbei in der Darstellung von Fig. 9B von einer Mittenposition nach links innerhalb des Gehäuses 110 versetzt dargestellt. Dabei ist der bewegliche Schlitten 482 beispielsweise in der zweiten Position angeordnet. Der in Fig. 9B rechts gezeigte Schlittenhebel 484 ist in Eingriff in der Lagerkerbe 978 des rechts gezeigten Betätigungshebels 370 angeordnet sowie in einer Auslenkungsstellung gezeigt. Der in Fig. 9B links gezeigte Schlittenhebel 484 ist außer Eingriff von der Lagerkerbe 978 des links gezeigten Betätigungshebels 370 angeordnet gezeigt. Der in Fig. 9B links gezeigte Schlittenhebel 484 ist in der Ruhestellung angeordnet.

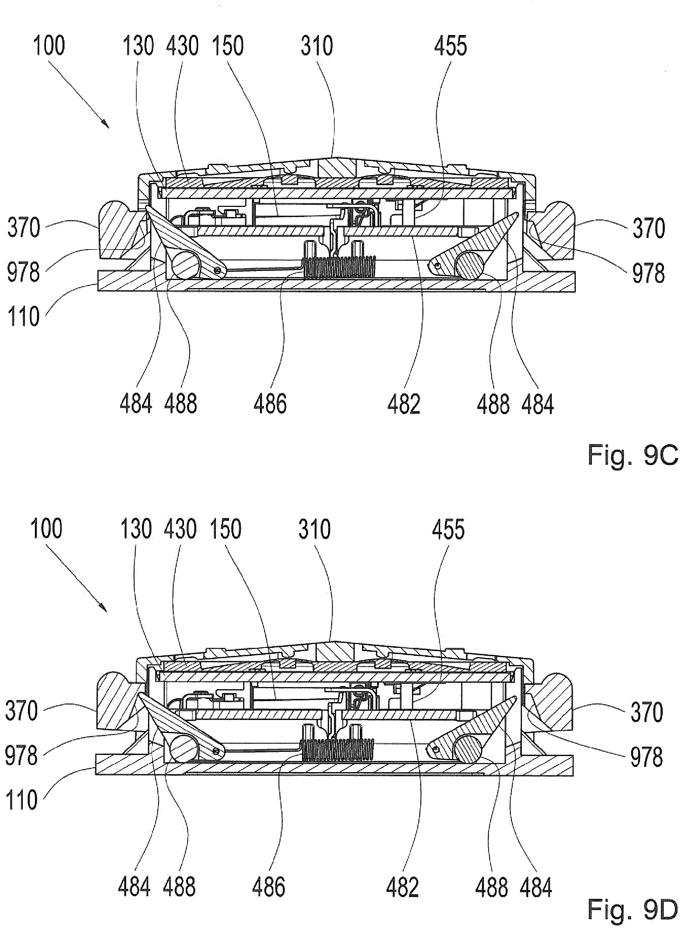

Fig. 9C zeigt den Funktaster 100 in einem Zustand ohne anliegende Betätigungskraft gegen Ende eines Schaltvorgangs. Hierbei sind die Betätigungshebel 370 zwischen ihrer Auslenkungsstellung und ihrer Ruhestellung angeordnet. Der bewegliche Schlitten 482 ist in der zweiten Position angeordnet. Die Schlittenhebel 484 sind außer Eingriff von den Lagerkerben 978 der Betätigungshebel 370 angeordnet gezeigt. Die Schlittenhebel 484 sind in ihrer Ruhestellung angeordnet.

Fig. 9D zeigt den Funktaster 100 in einem unbetätigten Zustand bzw. Ruhezustand bei Abwesenheit einer auf denselben ausgeübten Betätigungskraft nach dem Schaltvorgang der Figuren 9A bis 9C. Hierbei sind die Betätigungshebel 370 von der Bodenplatte des Gehäuses 110 beabstandet in ihrer Ruhestellung angeordnet. Die Umschaltmittel sind hierbei in der Darstellung von Fig. 9D von einer Mittenposition nach links innerhalb des Gehäuses 110 versetzt dargestellt. Dabei ist der bewegliche Schlitten 482 in der zweiten Position angeordnet. Der in Fig. 9C links gezeigte Schlittenhebel 484 ist in Eingriff in der Lagerkerbe 978 des links gezeigten Betätigungshebels 370 angeordnet gezeigt. Der in Fig. 9C rechts gezeigte Schlittenhebel 484 ist außer Eingriff von der Lagerkerbe 978 des Rechts gezeigten Betätigungshebels 370 angeordnet gezeigt. Die Schlittenhebel 484 sind in ihrer Ruhestellung angeordnet.

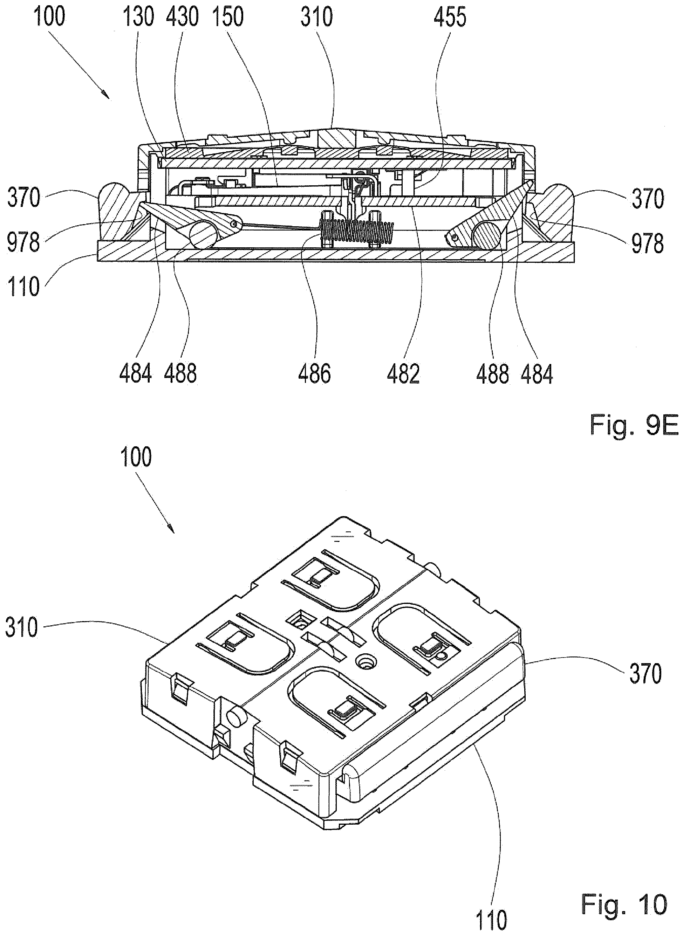

Fig. 9E zeigt den Funktaster 100 in einem vollständig betätigten Zustand bei einer anliegenden Betätigungskraft während eines weiteren Schaltvorgangs. Hierbei sind die Betätigungshebel 370 in Anlage gegen die Bodenplatte des Gehäuses 110 in einer Auslenkungsstellung angeordnet. Die Umschaltmittel sind hierbei in der Darstellung von Fig. 9E von einer Mittenposition nach rechts innerhalb des Gehäuses 110 versetzt dargestellt. Dabei ist der bewegliche Schlitten 482 in der ersten Position angeordnet. Der in Fig. 9E links gezeigte Schlittenhebel 484 ist in Eingriff in der Lagerkerbe 978 des links gezeigten Betätigungshebels 370 angeordnet sowie in einer Auslenkungsstellung gezeigt. Der in Fig. 9E rechts gezeigte Schlittenhebel 484 ist außer Eingriff von der Lagerkerbe 978 des Rechts gezeigten Betätigungshebels 370 angeordnet gezeigt. Der in Fig. 9E rechts gezeigte Schlittenhebel 484 ist in der Ruhestellung angeordnet.

Unter Bezugnahme auf die Figuren 9A bis 9E wird im Folgenden ein Betätigungsvorgang des Funktasters 100 nochmals mit anderen Worten zusammenfassend erläutert.

Beim Bewegen des Schlittens 482 aus einer Endposition in die andere Endposition wird die Energiewandlereinrichtung 150 in die eine oder andere Richtung aktiviert. Der Schlitten 482 ist von beiden Seiten mit den Schlittenhebeln 484 bestückt, welche wahlweise mit den Laufrollen 488 bzw. Rollen oder alternativ Gleitelementen zur Reduzierung von Reibkräften bestückt sind. Aus Kostengründen könnte bei einem anderen Ausführungsbeispiel auf die Laufrollen 488 verzichtet werden. Alternativ dazu könnte statt der Laufrolle 488 ein Gleitelement, beispielsweise eine Gleitplatte oder ein Gleitblock oder im Allgemeinen ein Element mit einer Gleitfläche verwendet werden. Dadurch wäre der Schlitten 482 konstruktiv einfach und somit kostengünstiger ausbildbar. Die beiden Schlittenhebel 484 sind durch die Zugfeder 486, die in einem inneren Hohlraum des beweglichen Schlittens 482 platziert ist, verbunden und in einer neutralen Lage bzw. der Ruhestellung gehalten, sodass sie eine Rotationsbewegung im Uhrzeigersinn und gegen den Uhrzeigersinn, zumindest in einem bestimmten Winkelbereich, absolvieren können. Durch die Zugfederkraft können die Schlittenhebel 484 wieder in ihre Ruhestellung zurück versetzt werden.

Im zusammengebauten Zustand des Funktasters 100 sind die Umschaltmittel bzw. ist die "Toggle-Mechanik" in einem betätigten Zustand des Funktasters 100 aufgrund der bistabilen mechanischen Eigenschaften der Energiewandlereinrichtung 150 in einer von zwei Positionen bzw. Endpositionen im Gehäuse 110, in die eine oder andere Richtung versetzt. Dabei ist einer der beiden Schlittenhebel 484 in einer Eingriffsposition angeordnet.

Beim Betätigen der Betätigungshebel 370 bzw. des Zwillingshebels wird ein in Eingriff stehender Schlittenhebel 484 durch eine Lagerkerbe 978 eines Betätigungshebels mitgenommen und in eine Drehbewegung versetzt. Dabei bewegt sich der Schlitten 482 linear in seine zweite Position und aktiviert bzw. betätigt die Energiewandlereinrichtung 150. Nach einem solchen Umschalten der Energiewandlereinrichtung 150 ist der bewegliche Schlitten 482 in der zweiten Position angeordnet.

Eine Rückstellung der Betätigungshebel 370 erfolgt mittels der Rückstellfeder des Funktasters 100. Beim Loslassen der Betätigungshebel 370 verlässt der bisher in Eingriff stehende Schlittenhebel 484 die Lagerkerbe 978 des jeweiligen Betätigungshebels 370 und wird mittels der Zugfeder 486 in seine neutrale Lage bzw. in die Ruhestellung gebracht. Bei einer weiteren Rückstellbewegung der Betätigungshebel 370 lenkt die Lagerkerbe 978 des gegenüberliegenden Betätigungshebels 370 den anderen Schlittenhebel 484 in die gegenläufige Richtung aus und lässt die Lagerkerbe 978 des Betätigungshebels 370 vorbei passieren. Kurz vor der Ruhestellung der Betätigungshebel 370 wird der andere Schlittenhebel 484 freigelassen und stellt sich in die Ruhestellung zurück. Jetzt steht der andere Schlittenhebel 484 in der Eingriffsposition. Bei einer nachfolgenden Betätigung der Betätigungshebel 370 wird der bewegliche Schlitten 482 zurückgestellt und aktiviert die Energiewandlereinrichtung 150 erneut. Somit absolviert der bewegliche Schlitten 482 bzw. die Energiewandlereinrichtung 150 bei jeder weiteren Betätigung eine Umschaltbewegung oder sogenannte Toggle-Bewegung.

In einem zusammengefügten bzw. verbauten Zustand des Funktasters 100 ist beispielsweise eine Taste bzw. Lichtschalter-Wippe an einer Drehachse des Deckels 110 drehbar befestigt und steht in einer mittleren Lage. Beim Betätigen der Taste in eine oder andere Richtung aktiviert ein primärer Betätigungszapfen der Taste einen der Betätigungshebel 370. Zudem aktiviert zumindest ein sekundärer Betätigungszapfen der Taste zumindest einen der Codierkontakte, bevor die Energiewandlereinrichtung 150 betätigt bzw. aktiviert wird. Nach dem Aktivieren der Energiewandlereinrichtung 150 wird eine Elektronik des Schaltungsträgers 130 mit Energie versorgt und wird entsprechend dem vorbetätigten Codierkontakt ein entsprechend codiertes Funktelegram bzw. Schaltsignal erzeugt. Beim Loslassen der Taste wird der zumindest eine Codierkontakt zurückgeschaltet. Die Energiewandlereinrichtung 150 wird dabei nicht aktiviert.

Diese Eigenschaft kann genutzt werden, um beim Betätigen derselben Taste zwei verschiedene Schaltsignale zu erzeugen. Beim Betätigen, wie oben beschrieben, wird das Schaltsignal nicht sofort erzeugt, sondern erst nach einer Zeitintervallmessung zwischen dem Schließen und Öffnen des zumindest einen Codierkontaktes. Beispielsweise bei einem Zeitintervall kürzer 100 Millisekunden wird ein erstes Schaltsignal erzeugt und versendet. Bei Überschreiten des Zeitintervalls wird ein von dem ersten Schaltsignal unterschiedliches, zweites Schaltsignal versendet. Diese Eigenschaft kann beispielsweise zum Unterscheiden zwischen einfachem Einschalten einer Lampe und einem Start eines Dimm-Vorganges genutzt werden. Bei einem kurzen Tastendruck wird die Lampe beispielsweise sofort auf volle Leistung eingeschaltet. Bei einem langem Tastendruck wird beispielsweise von dunkel nach hell hochgedimmt. Beim Drücken der Taste in eine gegenläufige Richtung wird beispielsweise ein Dimm-Stopp-Signal erzeugt.

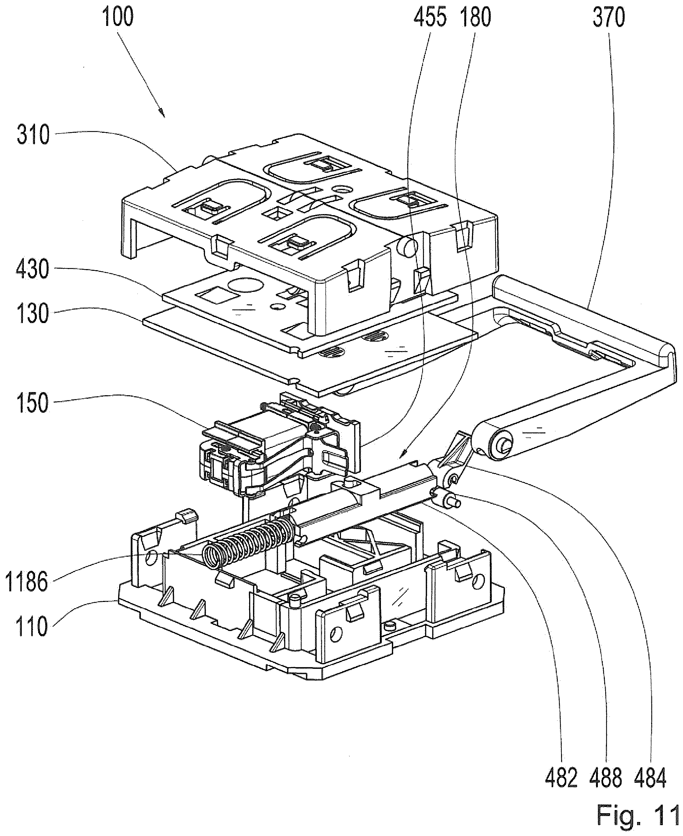

Fig. 10 zeigt eine perspektivische Darstellung eines Funktasters 100 gemäß einem weiteren Ausführungsbeispiel der vorliegenden Erfindung. Gezeigt sind von dem Funktaster 100 hierbei ein Gehäuse 110 bzw. Gehäuseboden, ein Deckel 310 bzw. Gehäusedeckel sowie ein Betätigungshebel 370. Der Funktaster 100 entspricht hierbei dem Funktaster aus Fig. 3, Fig. 4, Fig. 6 bzw. Figuren 9A bis 9E mit der Ausnahme, dass der Funktaster 100 in Fig. 10 als ein Einweg-Modul mit lediglich einem Betätigungshebel 370 ausgeführt ist. Nachfolgend werden unter Bezugnahme auf die Figuren 11 bis 12D Unterschiede zwischen dem Funktaster 100 gemäß dem in Fig. 10 dargestellten Ausführungsbeispiel der vorliegenden Erfindung und dem Funktaster aus Fig. 3, Fig. 4, Fig. 6 bzw. Figuren 9A bis 9E noch weiter erläutert.

Fig. 11 zeigt eine perspektivische Explosionsdarstellung des Funktasters 100 aus Fig. 10. Gezeigt sind von dem Funktaster 100 dabei das Gehäuse 110, der Schaltungsträger 130, die Energiewandlereinrichtung 150, die Umschaltmittel 180, der Deckel 310, der Betätigungshebel 370, die Schaltfolie 430, die Hilfsleiterplatte 455, der bewegliche Schlitten 482, ein Schlittenhebel 484, eine Laufrolle 488 und eine Druckfeder 1186. In Fig. 11 ist zu erkennen, dass im Unterschied zu dem Funktaster aus Fig. 3, Fig. 4, Fig. 6 bzw. Figuren 9A bis 9E der Funktaster 100 lediglich einen Betätigungshebel 370, der hierbei ohne Langloch und Zapfen ausgeformt ist, lediglich einen Schlittenhebel 484, lediglich eine Laufrolle 488 und anstelle einer Zugfeder die Druckfeder 1186 aufweist. Ferner ist in der Darstellung von Fig. 11 die Hilfsleiterplatte 455 in einem mit der Energiewandlereinrichtung 150 elektrisch und mechanisch verbundenen Zustand dargestellt. Die Druckfeder 1186 ist in dem beweglichen Schlitten 482 aufnehmbar und zwischen dem Schlittenhebel 484 und einer Seitenwand des Gehäuses 110 anordenbar.

Anders ausgedrückt kann somit mittels einer geänderten Bestückung eine Funktionalität des Funktasters 100 bezüglich des Funktasters aus Fig. 3, Fig. 4, Fig. 6 bzw. Figuren 9A bis 9E durch Austausch weniger Teile kostengünstig verändert werden. Dabei entfallen der Zwillingshebel, ein Schlittenhebel, eine Laufrolle, die Zugfeder und die Rückstellfeder des Funktasters aus Fig. 3, Fig. 4, Fig. 6 bzw. Figuren 9A bis 9E. Auf die Laufrolle 488 könnte wie vorbeschrieben aus Kostengründen verzichtet werden. Alternativ dazu könnte anstelle der Laufrolle ein Gleitelement gemäß einem der vorbeschriebenen Ausführungsbeispiele verwendet werden. Anstatt eines Zwillingshebels ist ein einfacher Betätigungshebel 370 beispielsweise mit erhöhtem Nocken angeordnet. Der an dem beweglichen Schlitten 482 montierte Schlittenhebel 484 ist beispielsweise bezüglich Fig. 3, Fig. 4, Fig. 6 bzw. Figuren 9A bis 9E verlängert und ist kontinuierlich in Eingriff in der Lagerkerbe des Betätigungshebels 370 angeordnet. Eine Rückstellung der Umschaltmittel 180 erfolgt mittels der Druckfeder 1186, die im Hohlraum des Schlittens 482 zwischen dem Schlitten 482 und einer Seitenwand des Gehäuses 110 vorgespannt ist. Beim Betätigen des Funktasters 100 wird die Energiewandlereinrichtung 150 aktiviert und auch eine mechanische Energie für einen Rückschaltvorgang in der Druckfeder 1186 gespeichert. Beim Loslassen der Taste stellt die Druckfeder 1186 die Umschaltmittel 180 zurück und aktiviert das Rückschalten der Energiewandlereinrichtung 150.

Auch der als Einweg-Modul konfigurierte Funktaster 100 kann mit einer Wippe, Doppelwippe oder Mehrfachwippe als Taste betrieben werden. Es ist ermöglicht, durch einfachen Umbau eine kostengünstige Variantenvielfalt des Funktasters 100 zu realisieren. Die weiteren Prozesse bzw. Abläufe sind ähnlich wie bei dem als Zweiwege-Modul konfigurierten Funktaster aus Fig. 3, Fig. 4, Fig. 6 bzw. Figuren 9A bis 9E.

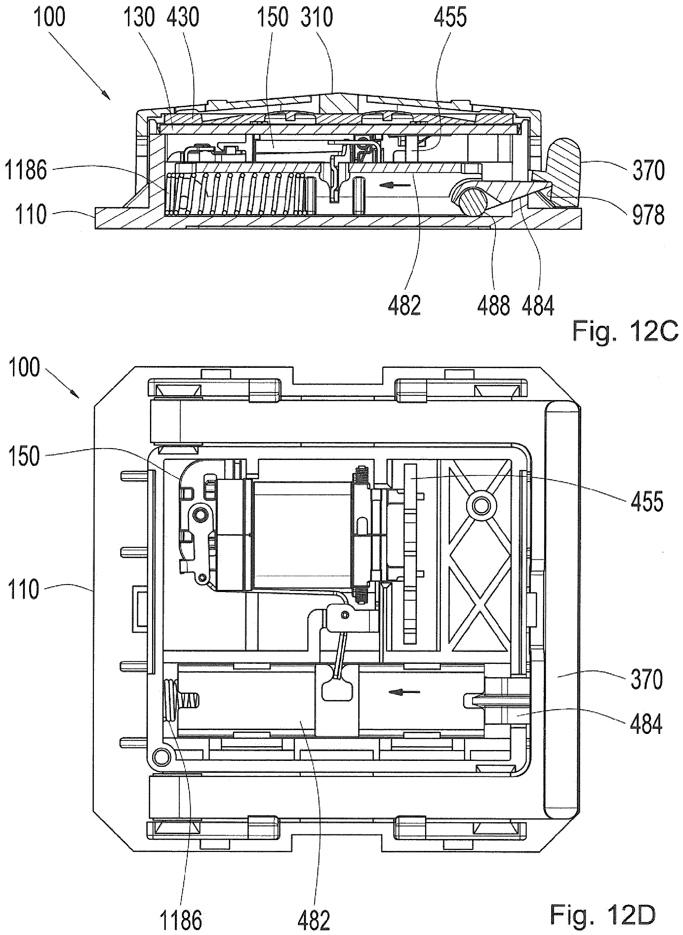

Die Figuren 12A bis 12D zeigen Schnittdarstellungen und Draufsichten des Funktasters 100 aus Fig. 10 bis Fig. 11 in unterschiedlichen Zuständen bei einem Schaltvorgang. Hierbei zeigen Fig. 12A und Fig. 12C Schnittdarstellungen des Funktasters 100, wobei Fig. 12B und Fig. 12D Draufsichten des Funktasters 100 zeigen.

Gezeigt bzw. darstellungsbedingt erkennbar sind in den Schnittansichten der Figuren 12A und 12C dabei von dem Funktaster 100 jeweils das Gehäuse 110, der Schaltungsträger 130, die Energiewandlereinrichtung 150, der Deckel 310, der Betätigungshebel 370, die Schaltfolie 430, die Hilfsleiterplatte 455, der bewegliche Schlitten 482, der Schlittenhebel 484, die Laufrolle 488, eine Lagerkerbe 978 und die Druckfeder 1186. Die Lagerkerbe 978 ist in dem Betätigungshebel 370 ausgeformt. Die Lagerkerbe 978 ist ausgebildet, um den Schlittenhebel 484 in Eingriff zu nehmen. Der Funktaster 100 ist für die Schnittdarstellungen der Figuren 12A und 12C entlang einer Ebene geschnitten, die sich normal bezüglich einer Bodenplatte des Gehäuses 110 und durch eine Längserstreckungsachse des beweglichen Schlittens 482 sowie der Druckfeder 1186 erstreckt.

Gezeigt bzw. darstellungsbedingt erkennbar sind in den Draufsichten der Figuren 12B und 12D dabei von dem Funktaster 100 jeweils das Gehäuse 110, die Energiewandlereinrichtung 150, der Betätigungshebel 370, die Hilfsleiterplatte 455, der bewegliche Schlitten 482, der Schlittenhebel 484 und die Druckfeder 1186. Der Funktaster 100 ist in den Draufsichten der Figuren 12B und 12D ohne den Schaltungsträger, die Schaltvorrichtung und den Deckel gestellt, wobei die Laufrolle und die Lagerkerbe in den Draufsichten verdeckt sind.

Fig. 12A zeigt hierbei den Funktaster 100 in einem unbetätigten Zustand bzw. Ruhezustand bei Abwesenheit einer auf denselben ausgeübten Betätigungskraft und somit vor oder nach einem Schaltvorgang. Hierbei ist der Betätigungshebel 370 von einer Bodenplatte des Gehäuses 110 beabstandet in der Ruhestellung angeordnet. Die Umschaltmittel, die den beweglichen Schlitten 482, den Schlittenhebel 484, die Laufrolle 488 und die Druckfehler 1186 aufweisen, sind hierbei in der Darstellung von Fig. 12A von einer Mittenposition nach rechts innerhalb des Gehäuses 110 versetzt dargestellt. Dabei ist der bewegliche Schlitten 482 beispielsweise in der ersten Position angeordnet. Der in Fig. 12A rechts angeordnet gezeigte Schlittenhebel 484 ist in Eingriff in der Lagerkerbe 978 des rechts angeordnet gezeigten Betätigungshebels 370 aufgenommen dargestellt. Der Schlittenhebel 484 ist hierbei in der Ruhestellung angeordnet. Die Druckfeder 1186 befindet sich in einem entspannten Zustand. In Fig. 12B ist eine Draufsicht des Funktasters 100 in dem Zustand aus Fig. 12A gezeigt.

Fig. 12C zeigt den Funktaster 100 aus Fig. 12A in einem vollständig betätigten Zustand bei einer anliegenden Betätigungskraft während eines Schaltvorgangs. Hierbei ist der Betätigungshebel 370 in Anlage gegen die Bodenplatte des Gehäuses 110 in einer Auslenkungsstellung angeordnet. Die Umschaltmittel sind hierbei in der Darstellung von Fig. 12C von einer Mittenposition nach links innerhalb des Gehäuses 110 versetzt dargestellt. Dabei ist der bewegliche Schlitten 482 beispielsweise in der zweiten Position angeordnet. Der Schlittenhebel 484 ist in Eingriff in der Lagerkerbe 978 des Betätigungshebels 370 sowie in einer Auslenkungsstellung angeordnet. Die Druckfeder 1186 befindet sich in einem gespannten bzw. komprimierten Zustand. In Fig. 12D ist eine Draufsicht des Funktasters 100 in dem Zustand aus Fig. 12C dargestellt.

Unter Bezugnahme auf die Figuren 12A bis 12D wird im Folgenden ein Betätigungsvorgang des Funktasters 100 zusammenfassend und mit anderen Worten erläutert. Eine Taste als Betätigungswippe des Funktasters 100 kann hierbei in einer schrägen Ruhelage angeordnet sein und ist beispielsweise lediglich an einer Stelle bzw. in eine Richtung zu betätigen. Dabei kann es aus Funktionalitätsgründen erforderlich sein, auch beim Loslassen der Taste einen elektrischen Energieimpuls zu erzeugen und ein zweites Schaltsignal zu versenden, um beispielsweise ein Dimmen oder eine Jalousie zu steuern. Dabei kann eine aufzubringende Betätigungskraft im Vergleich zu dem als Zweiwege-Modul ausgeführten Funktaster aus Fig. 3, Fig. 4, Fig. 6 und Figuren 9A bis 9E im Wesentlichen gleich bleiben. Dies ist möglich durch eine Anpassung von Hebelverhältnissen des Betätigungshebels 370 und des Schlittenhebels 484. Bei dem Funktaster 100 aus Fig. 10, Fig. 11 und Figuren 12A bis 12D kann eine gesamte Wipp-Bewegung einer Taste von einer Schräglage bis zu der anderen Schräglage, d. h. ein voller Zyklus, zur Erzeugung von zwei Energieimpulsen genutzt werden, wohingegen bei dem Funktaster aus Fig. 3, Fig. 4, Fig. 6 und Figuren 9A bis 9E zwei Halbzyklen zur Erzeugung von zwei elektrischen Energieimpulsen genutzt werden, was beispielsweise im Wesentlichen die gleiche Energiebilanz ergibt.

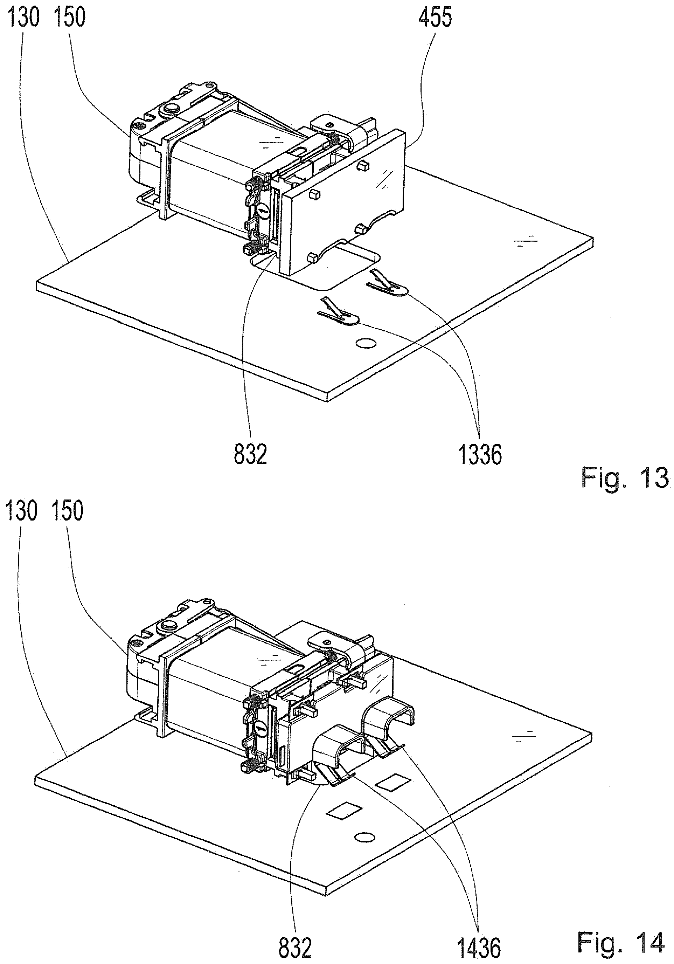

Fig. 13 zeigt eine perspektivische Darstellung einer Energiewandlereinrichtung sowie eines Schaltungsträgers des Funktasters aus Fig. 3, Fig. 4, Fig. 6 und Figuren 9A bis 9E bzw. Fig. 10, Fig. 11 und Figuren 12A bis 12D gemäß einem Ausführungsbeispiel der vorliegenden Erfindung. Gezeigt sind hierbei der Schaltungsträger 130, die Energiewandlereinrichtung 150, die Hilfsleiterplatte 455, die Durchgangsöffnung 832 und SMD-Federkontakte 1336 bzw. Oberflächenbefestigungskontakte. Von dem Schaltungsträger 130 ist insbesondere eine Hauptoberfläche gezeigt, welche der Energiewandlereinrichtung 150 in einem montierten Zustand des Funktasters zugewandt ist. In der Darstellung von Fig. 13 ist die Hilfsleiterplatte 455 elektrisch und mechanisch mit der Energiewandlereinrichtung 150 verbunden gezeigt. Die Durchgangsöffnung 832 ist mittig in dem Schaltungsträger 130 angeordnet. Bei dem Schaltungsträger 130 handelt es sich beispielsweise um den Schaltungsträger aus Fig. 8. Die SMD-Federkontakte 1336 sind an der Hauptoberfläche des Schaltungsträgers 130 angeordnet. Die SMD-Federkontakte 1336 sind ausgebildet, um eine elektrisch leitfähige Verbindung zwischen dem Schaltungsträger 130 und der Energiewandlereinrichtung 150 herzustellen bzw. eine Herstellung derselben zu ermöglichen. Somit kann eine elektrische Kontaktierung zwischen dem Schaltungsträger 130 und der Hilfsleiterplatte 455 mittels der SMD-Federkontakte 1336 erfolgen.

Fig. 14 zeigt eine perspektivische Darstellung einer Energiewandlereinrichtung sowie eines Schaltungsträgers des Funktasters aus Fig. 3, Fig. 4, Fig. 6 und Figuren 9A bis 9E bzw. Fig. 10, Fig. 11 und Figuren 12A bis 12D gemäß einem Ausführungsbeispiel der vorliegenden Erfindung. Gezeigt sind hierbei der Schaltungsträger 130, die Energiewandlereinrichtung 150, die Durchgangsöffnung 832 und Stanzgitter-Federkontakte 1436. Von dem Schaltungsträger 130 ist insbesondere eine Hauptoberfläche gezeigt, welche der Energiewandlereinrichtung 150 in einem montierten Zustand des Funktasters zugewandt ist. In der Darstellung von Fig. 14 ist die Hilfsleiterplatte weggelassen. Die Durchgangsöffnung 832 ist mittig in dem Schaltungsträger 130 angeordnet. Bei dem Schaltungsträger 130 handelt es sich beispielsweise um den Schaltungsträger aus Fig. 8. Der Schaltungsträger 130 ist hierbei als ein umspritztes Stanzgitter ausgeformt. Die Stanzgitter-Federkontakte 1436 sind an der Hauptoberfläche des Schaltungsträgers 130 angeordnet. Die Stanzgitter-Federkontakte 1436 sind ausgebildet, um eine elektrisch leitfähige Verbindung zwischen dem Schaltungsträger 130 und der Energiewandlereinrichtung 150 herzustellen bzw. eine Herstellung derselben zu ermöglichen. Somit kann eine elektrische Kontaktierung zwischen dem Schaltungsträger 130 direkt mit der Energiewandlereinrichtung 150 mittels der Stanzgitter-Federkontakte 1436 erfolgen. Dadurch können die Hilfsleiterplatte und damit verbundene Lötkosten entfallen. Dies kann einen weiteren Kostenvorteil bringen und eine Zuverlässigkeit der Kontaktierung erhöhen.

Die beschriebenen und in den Figuren gezeigten Ausführungsbeispiele sind nur beispielhaft gewählt.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Funktaster
- 110: Gehäuse
- 120: Taste
- 130: Schaltungsträger
- 140: Signalausgabeeinrichtung
- 150: Energiewandlereinrichtung
- 160: Schaltvorrichtung
- 170: Betätigungsmittel
- 180: Umschaltmittel
- F: Betätigungskraft bzw. Einleitung mechanischer Energie
- 200: Verfahren zum Erzeugen
- 210: Schritt des Generierens
- 220: Schritt des Ausgebens
- 310: Deckel
- 370: Betätigungshebel
- 430: Schaltmatte bzw. Schaltfolie
- 455: Kontaktplatte bzw. Hilfsleiterplatte
- 472: Langloch
- 474: Zapfen
- 476: Rückstellfeder
- 482: beweglicher Schlitten
- 484: Schlittenhebel
- 486: Zugfeder
- 488: Laufrolle
- 832: Durchgangsöffnung
- 834: Codierkontakt
- 978: Lagerkerbe
- 1186: Druckfeder
- 1336: SMD-Federkontakt
- 1436: Stanzgitter-Federkontakt

## Patentansprüche

1. Schaltvorrichtung (160) für einen Funktaster (100), wobei die Schaltvorrichtung (160) Betätigungsmittel (170; 370; 472, 474, 476; 978) zum Aufnehmen einer bei einem Schaltvorgang in die Schaltvorrichtung (160) einleitbaren mechanischen Energie aufweist, **dadurch gekennzeichnet, dass** die Schaltvorrichtung (160) mit den Betätigungsmitteln (170; 370; 472, 474, 476; 978) und mit einer Energiewandlereinrichtung (150) zum Wandeln der mechanischen Energie in eine elektrische Energie zum Aussenden eines Schaltsignals mechanisch koppelbare Umschaltmittel (180; 482, 484, 486, 488; 1186) zum Übertragen der mechanischen Energie von den Betätigungsmitteln (170; 370; 472, 474, 476; 978) auf die Energiewandlereinrichtung (150) aufweist, wobei die Umschaltmittel (180; 482, 484, 486, 488; 1186) ausgebildet sind, um bei dem Schaltvorgang durch die Betätigungsmittel (170; 370; 472, 474, 476; 978) betätigbar zu sein, um in einem mit der Energiewandlereinrichtung (150) gekoppelten Zustand die Energiewandlereinrichtung (150) mindestens von einem ersten stabilen Zustand in einen zu dem ersten stabilen Zustand unterschiedlichen, zweiten stabilen Zustand zu versetzen, um zumindest einen elektrischen Energieimpuls zu erzeugen, **dadurch gekennzeichnet, dass** die Umschaltmittel (180; 482, 484, 486, 488; 1186) einen mit der Energiewandlereinrichtung (150) mechanisch koppelbaren, beweglichen Schlitten (482) und zumindest einen mittels der Betätigungsmittel (170; 370; 472, 474, 476; 978) betätigbaren Schlittenhebel (484) aufweisen, wobei der zumindest eine Schlittenhebel (484) ausgebildet ist, um den beweglichen Schlitten (482) zwischen einer ersten Position, die dem ersten stabilen Zustand der Energiewandlereinrichtung (150) zugeordnet ist, und einer zweiten Position zu bewegen, die dem zweiten stabilen Zustand der Energiewandlereinrichtung (150) zugeordnet ist.

2. Schaltvorrichtung (160) gemäß Anspruch 1, **gekennzeichnet durch** zumindest eine Laufrolle (488) oder ein Gleitelement, die bzw. das mit dem beweglichen Schlitten (482) und/oder dem zumindest einen Schlittenhebel (484) mechanisch koppelbar ist.

3. Schaltvorrichtung (160) gemäß einem der Ansprüche 1 bis 2, **dadurch gekennzeichnet, dass** die Umschaltmittel (180; 482, 484, 486, 488; 1186) elastische Mittel (1186) aufweisen, die ausgebildet sind, um auf den beweglichen Schlitten (482) zu wirken, um den beweglichen Schlitten (482) von der zweiten Position in die erste Position zu bewegen.

4. Schaltvorrichtung (160) gemäß einem der Ansprüche 1 bis 2, **dadurch gekennzeichnet, dass** die Umschaltmittel (180; 482, 484, 486, 488; 1186) elastische Mittel (486) und zwei Schlittenhebel (484) aufweisen, wobei die elastischen Mittel (486) ausgebildet sind, um die Schlittenhebel (484) in eine Ruhestellung vorzuspannen, wobei der bewegliche Schlitten (482) zwischen den Schlittenhebeln (484) anordenbar ist, wobei ein erster der Schlittenhebel (484) ausgebildet ist, um den beweglichen Schlitten (482) von der ersten Position in die zweite Position zu bewegen, wobei ein zweiter der Schlittenhebel (484) ausgebildet ist, um den beweglichen Schlitten (482) von der zweiten Position in die erste Position zu bewegen.

5. Funktaster (100) mit
einer Schaltvorrichtung (160) gemäß einem der vorangegangenen Ansprüche; einer Energiewandlereinrichtung (150), die mit den Umschaltmitteln (180; 482, 484, 486, 488; 1186) der Schaltvorrichtung (160) mechanisch koppelbar ist und ausgebildet ist, um die bei dem Schaltvorgang in die Schaltvorrichtung (160) einleitbare mechanische Energie in die elektrische Energie zum Aussenden des Schaltsignals zu wandeln;
einem Schaltungsträger (130) mit einer Signalausgabeeinrichtung (140) zum Aussenden des Schaltsignals, wobei der Schaltungsträger (130) elektrisch leitfähig mit der Energiewandlereinrichtung (150) verbindbar ist;
einem Gehäuse (110; 310) mit zumindest einem Gehäuseelement, wobei das Gehäuse (110; 310) zum Aufnehmen der Schaltvorrichtung (160), der Energiewandlereinrichtung (150) und des Schaltungsträgers (130) ausgebildet ist; und
einer Taste (120) zum Übertragen der mechanischen Energie auf die Betätigungsmittel (170; 370; 472, 474, 476; 978) der Schaltvorrichtung (160), wobei die Taste (120) an dem Gehäuse (110; 310) anbringbar ist.

6. Funktaster (100) gemäß Anspruch 5, **dadurch gekennzeichnet, dass** die Signalausgabeeinrichtung (140) eine Funkelektronik aufweist, wobei der Schaltungsträger (130) zumindest einen Codierkontakt (834) aufweist, der bei dem Schaltvorgang betätigbar ist, um ein Codiersignal bereitzustellen.

7. Funktaster (100) gemäß einem der Ansprüche 5 bis 6, **dadurch gekennzeichnet, dass** die Taste (120) als eine Wippe, eine Doppelwippe oder eine Mehrfachwippe ausgeformt ist.

8. Funktaster (100) gemäß einem der Ansprüche 5 bis 7, **dadurch gekennzeichnet, dass** das Gehäuse (110; 310) zumindest teilweise aus einem Schallentkopplungsmaterial zum Reduzieren eines Betätigungsgeräuschs ausgeformt ist und/oder der Funktaster (100) eine Schallentkopplungskapsel zur Schalldämmung für die Energiewandlereinrichtung (150) aufweist.

9. Verfahren (200) zum Erzeugen eines Schaltsignals eines Funktasters (100), wobei das Verfahren (200) in Verbindung mit einem Funktaster (100) ausführbar ist, der eine Schaltvorrichtung (160), eine Energiewandlereinrichtung (150) zum Wandeln mechanischer Energie in elektrische Energie und einen Schaltungsträger (130) mit einer Signalausgabeeinrichtung (140) aufweist, wobei der Schaltungsträger (130) elektrisch leitfähig mit der Energiewandlereinrichtung (150) verbunden ist, wobei das Verfahren (200) folgende Schritte aufweist:
Generieren (210) zumindest eines elektrischen Energieimpulses zum Aussenden des Schaltsignals mittels der Schaltvorrichtung (160) und der Energiewandlereinrichtung (150) unter Verwendung einer bei einem Schaltvorgang in die Schaltvorrichtung (160) eingeleiteten mechanischen Energie, wobei die mechanische Energie von Betätigungsmitteln (170; 370; 472, 474, 476; 978) der Schaltvorrichtung (160) aufgenommen und von mit den Betätigungsmitteln (170; 370; 472, 474, 476; 978) und mit der Energiewandlereinrichtung (150) mechanisch gekoppelten Umschaltmitteln (180; 482, 484, 486, 488; 1186) auf die Energiewandlereinrichtung (150) übertragen wird, wobei die Umschaltmittel (180; 482, 484, 486, 488; 1186) bei dem Schaltvorgang durch die Betätigungsmittel (170; 370; 472, 474, 476; 978) betätigt werden, um zum Generieren des zumindest einen elektrischen Energieimpuls die Energiewandlereinrichtung (150) mindestens von einem ersten stabilen Zustand in einen zu dem ersten stabilen Zustand unterschiedlichen, zweiten stabilen Zustand zu versetzen, wobei die Umschaltmittel (180; 482, 484, 486, 488; 1186) einen mit der Energiewandlereinrichtung (150) mechanisch koppelbaren, beweglichen Schlitten (482) und zumindest einen mittels der Betätigungsmittel (170; 370; 472, 474, 476; 978) betätigbaren Schlittenhebel (484) aufweisen, wobei der zumindest eine Schlittenhebel (484) ausgebildet ist, um den beweglichen Schlitten (482) zwischen einer ersten Position, die dem ersten stabilen Zustand der Energiewandlereinrichtung (150) zugeordnet ist, und einer zweiten Position zu bewegen, die dem zweiten stabilen Zustand der Energiewandlereinrichtung (150) zugeordnet ist; und
Ausgeben (220) des Schaltsignals per Funk mittels der Signalausgabeeinrichtung (140) unter Verwendung des zumindest einen elektrischen Energieimpuls.

## Claims

1. Switching apparatus (160) for a radio pushbutton (100), wherein the switching apparatus (160) has operating means (170; 370; 472, 474, 476; 978) for absorbing mechanical energy which can be introduced into the switching apparatus (160) during a switching process, **characterized in that** the switching apparatus (160) has switchover means (180; 482, 484, 486, 488; 1186), which can be mechanically coupled to the operating means (170; 370; 472, 474, 476; 978) and to an energy converter device (150) for converting the mechanical energy into electrical energy for emitting a switching signal, for transmitting the mechanical energy from the operating means (170; 370; 472, 474, 476; 978) to the energy converter device (150), wherein the switchover means (180; 482, 484, 486, 488; 1186) are designed in order to be operated by the operating means (170; 370; 472, 474, 476; 978) during the switching process in order to, in a state in which the said switchover means are coupled to the energy converter device (150), move the energy converter device (150) at least from a first stable state to a second stable state, which is different from the first stable state, in order to generate at least one electrical energy pulse, **characterized in that** the switchover means (180; 482, 484, 486, 488; 1186) have a moving carriage (482), which can be mechanically coupled to the energy converter device (150), and at least one carriage lever (484) which can be operated by means of the operating means (170; 370; 472, 474, 476; 978), wherein the at least one carriage lever (484) is designed in order to move the movable carriage (482) between a first position, which is associated with the first stable state of the energy converter device (150), and a second position, which is associated with the second stable state of the energy converter device (150) .

2. Switching apparatus (160) according to Claim 1, **characterized by** at least one roller (488) or one sliding element, which roller or sliding element can be mechanically coupled to the moving carriage (482) and/or to the at least one carriage lever (484).

3. Switching apparatus (160) according to either of Claims 1 and 2, **characterized in that** the switchover means (180; 482, 484, 486, 488; 1186) have elastic means (1186) which are designed in order to act on the moving carriage (482) in order to move the moving carriage (482) from the second position to the first position.

4. Switching apparatus (160) according to either of Claims 1 and 2, **characterized in that** the switchover means (180; 482, 484, 486, 488; 1186) have elastic means (486) and two carriage levers (484), wherein the elastic means (486) are designed in order to prestress the carriage levers (484) in an inoperative position, wherein the moving carriage (482) can be arranged between the carriage levers (484), wherein a first of the carriage levers (484) is designed in order to move the moving carriage (482) from the first position to the second position, wherein a second of the carriage levers (484) is designed in order to move the moving carriage (482) from the second position to the first position.

5. Radio pushbutton (100) comprising
a switching apparatus (160) according to one of the preceding claims;
an energy converter device (150) which can be mechanically coupled to the switchover means (180; 482, 484, 486, 488; 1186) of the switching apparatus (160) and is designed in order to convert the mechanical energy which can be introduced into the switching apparatus (160) during the switching process into the electrical energy for emitting the switching signal;
a circuit carrier (130) comprising a signal output device (140) for emitting the switching signal, wherein the circuit carrier (130) can be electrically conductively connected to the energy converter device (150) ;
a housing (110; 310) having at least one housing element, wherein the housing (110; 310) is designed to accommodate the switching apparatus (160), the energy converter device (150) and the circuit carrier (130); and
a button (120) for transmitting the mechanical energy to the operating means (170; 370; 472, 474, 476; 978) of the switching apparatus (160), wherein the button (120) can be attached to the housing (110; 310).

6. Radio pushbutton (100) according to Claim 5, **characterized in that** the signal output device (140) has a radio electronics system, wherein the circuit carrier (130) has at least one coding contact (834) which can be operated during the switching process in order to provide a coding signal.

7. Radio pushbutton (100) according to either of Claims 5 and 6, **characterized in that** the button (120) is formed as a rocker, a double rocker or a multiple rocker.

8. Radio pushbutton (100) according to one of Claims 5 to 7, **characterized in that** the housing (110; 310) is at least partially formed from a sound decoupling material for reducing an operating noise and/or the radio pushbutton (100) has a sound decoupling capsule for sound insulation for the energy converter device (150) .

9. Method (200) for generating a switching signal of a radio pushbutton (100), wherein the method (200) can be executed in conjunction with a radio pushbutton (100) which has a switching apparatus (160), an energy converter device (150) for converting mechanical energy into electrical energy and a circuit carrier (130) comprising a signal output device (140), wherein the circuit carrier (130) is electrically conductively connected to the energy converter device (150), wherein the method (200) has the following steps:
generating (210) at least one electrical energy pulse for emitting the switching signal by means of the switching apparatus (160) and the energy converter device (150) using mechanical energy which is introduced into the switching apparatus (160) during a switching process, wherein the mechanical energy is absorbed by operating means (170; 370; 472, 474, 476; 978) of the switching apparatus (160) and transmitted by switchover means (180; 482, 484, 486, 488; 1186), which are mechanically coupled to the operating means (170; 370; 472, 474, 476; 978) and to the energy converter device (150), to the energy converter device (150), wherein the switchover means (180; 482, 484, 486, 488; 1186) are operated by the operating means (170; 370; 472, 474, 476; 978) during the switching process in order to move the energy converter device (150) at least from a first stable state to a second stable state, which is different from the first stable state, for generating the at least one electrical energy pulse, wherein the switchover means (180; 482, 484, 486, 488; 1186) have a moving carriage (482), which can be mechanically coupled to the energy converter device (150), and at least one carriage lever (484) which can be operated by means of the operating means (170; 370; 472, 474, 476; 978), wherein the at least one carriage lever (484) is designed in order to move the movable carriage (482) between a first position, which is associated with the first stable state of the energy converter device (150), and a second position, which is associated with the second stable state of the energy converter device (150); and outputting (220) the switching signal by radio by means of the signal output device (140) using the at least one electrical energy pulse.

## Revendications

1. Dispositif de commutation (160) d'un interrupteur sans fil (100), le dispositif de commutation (160) comportant des moyens de manoeuvre (170 ; 370 ; 472, 474, 476 ; 978) destinés à absorber une énergie mécanique pouvant être introduite dans dispositif de commutation (160), lors d'un processus de commutation, **caractérisé en ce que** le dispositif de commutation (160) comporte des moyens d'inversion (180 ; 482, 484, 486, 488 ; 1186) pouvant être accouplés mécaniquement avec les moyens de manoeuvre (170 ; 370 ; 472, 474, 476 ; 978) et avec un système convertisseur d'énergie (150), destiné à convertir l'énergie mécanique en une énergie électrique pour émettre un signal de commutation, pour transmettre l'énergie mécanique des moyens de manoeuvre (170 ; 370 ; 472, 474, 476 ; 978) vers le système convertisseur d'énergie (150), les moyens d'inversion (180 ; 482, 484, 486, 488 ; 1186) étant conçus pour pouvoir être manoeuvrés lors du processus de commutation par les moyens de manoeuvre (170 ; 370 ; 472, 474, 476 ; 978), pour dans un état accouplé avec le système convertisseur d'énergie (150), amener le système convertisseur d'énergie (150) d'au moins un premier état stable dans un deuxième état stable différent du premier état stable, pour générer au moins une impulsion d'énergie électrique, **caractérisé en ce que** les moyens d'inversion (180 ; 482, 484, 486, 488 ; 1186) comportent un chariot (482) mobile, pouvant être mécaniquement accouplé avec le système convertisseur d'énergie (150) et au moins un levier de chariot (484) susceptible d'être manoeuvré par les moyens de manoeuvre (170 ; 370 ; 472, 474, 476 ; 978), l'au moins un levier de chariot (484) étant conçu pour déplacer le chariot (482) mobile entre une première position, qui est affectée au premier état stable du système convertisseur d'énergie (150) et une deuxième position, qui est affectée au deuxième état stable du système convertisseur d'énergie (150).

2. Dispositif de commutation (160) selon la revendication 1, **caractérisé par** au moins un galet de roulement (488) ou un élément coulissant, qui peut être accouplé mécaniquement avec le chariot (482) et/ou avec l'au moins un levier de chariot (484) .

3. Dispositif de commutation (160) selon l'une quelconque des revendications 1 à 2, **caractérisé en ce que** les moyens d'inversion (180 ; 482, 484, 486, 488 ; 1186) comportent des moyens élastiques (1186) qui sont conçus pour agir sur le chariot (482) mobile, pour déplacer le chariot (482) de la deuxième position dans la première position.

4. Dispositif de commutation (160) selon l'une quelconque des revendications 1 à 2, **caractérisé en ce que** les moyens d'inversion (180 ; 482, 484, 486, 488 ; 1186) comportent les moyens élastiques (486) et deux leviers de chariot (484), les moyens élastiques (486) étant conçus pour précontraindre les leviers de chariot (484) dans une position de repos, le chariot (482) mobile pouvant être placé entre les leviers de chariot (484), un premier des leviers de chariot (484) étant conçu pour déplacer le chariot (482) mobile de la première position dans la deuxième position, un deuxième des leviers de chariot (484) étant conçu pour déplacer le chariot (482) mobile de la deuxième position dans la première position.

5. Interrupteur sans fil (100) comprenant un dispositif de commutation (160) selon l'une quelconque des revendications précédentes ;
un système convertisseur d'énergie (150), pouvant être couplé mécaniquement avec les moyens d'inversion (180 ; 482, 484, 486, 488 ; 1186) du dispositif de commutation (160) et qui est conçu pour convertir l'énergie mécanique pouvant être introduite dans le dispositif de commutation (160) lors du processus de commutation dans l'énergie électrique pour émettre le signal de commutation ; une plaquette de circuit (130) pourvue d'un système émetteur de signaux (140), destiné à émettre le signal de commutation, la plaquette de circuit (130) pouvant être connectée de manière à pouvoir conduire l'électricité avec le système convertisseur d'énergie (150) ;
un boîtier (110 ; 310) comportant au moins un élément de boîtier, le boîtier (110 ; 310) étant conçu pour recevoir le dispositif de commutation (160), le système convertisseur d'énergie (150) et la plaquette de circuit (130) ; et
une touche (120), destinée à transmettre l'énergie mécanique sur les moyens de manoeuvre (170 ; 370 ; 472, 474, 476 ; 978) du dispositif de commutation (160), la touche (120) pouvant être montée sur le boîtier (110 ; 310).

6. Interrupteur sans fil (100) selon la revendication 5, **caractérisé en ce que** le système émetteur de signaux (140) comporte un système radio-électronique, la carte de circuit (130) comportant au moins un contact de codage (834) qui peut être manoeuvré lors du processus de commutation, pour mettre à disposition un signal de codage.

7. Interrupteur sans fil (100) selon l'une quelconque des revendications 5 à 6, **caractérisé en ce que** la touche (120) est façonnée comme une bascule, une double bascule ou une bascule multiple.

8. Interrupteur sans fil (100) selon l'une quelconque des revendications 5 à 7, **caractérisé en ce que** le boîtier (110 ; 310) est façonné au moins partiellement en une matière insonorisante, pour la réduction d'un bruit de manoeuvre et/ou **en ce que** l'interrupteur sans fil (100) comporte une capsule insonorisante pour le système convertisseur d'énergie (150).

9. Procédé (200), destiné à générer un signal de commutation d'un interrupteur sans fil (100), le procédé (200) étant réalisable en association avec un interrupteur sans fil (100) qui comporte un dispositif de commutation (160), un système convertisseur d'énergie (150), destiné à convertir de l'énergie mécanique en énergie électrique et une plaquette de circuit (130) dotée d'un système émetteur de signaux (140), la plaquette de circuit (130) étant connectée de manière conductrice d'électricité avec le système convertisseur d'énergie (150), le procédé (200) comportant les étapes suivantes, consistant à :
générer (210) au moins une impulsion d'énergie électrique, pour émettre le signal de commutation au moyen du dispositif de commutation (160) et du système convertisseur d'énergie (150), en utilisant une énergie mécanique introduite lors d'un processus de commutation dans le dispositif de commutation (160), l'énergie mécanique étant absorbée par des moyens de manoeuvre (170 ; 370 ; 472, 474, 476 ; 978) du dispositif de commutation (160) et transmise par des moyens d'inversion (180 ; 482, 484, 486, 488 ; 1186) accouplés mécaniquement avec les moyens de manoeuvre (170 ; 370 ; 472, 474, 476 ; 978) et avec le système convertisseur d'énergie (150) sur le système convertisseur d'énergie (150), lors du processus de commutation, les moyens d'inversion (180 ; 482, 484, 486, 488 ; 1186) étant manoeuvrés par les moyens de manoeuvre (170 ; 370 ; 472, 474, 476 ; 978) et pour générer l'au moins une impulsion d'énergie électrique, faire passer le système convertisseur d'énergie (150) au moins d'un premier état stable dans un deuxième état stable, différent du premier état stable, les moyens d'inversion (180 ; 482, 484, 486, 488 ; 1186) comportant un chariot (482) mobile, pouvant être accouplé mécaniquement avec le système convertisseur d'énergie (150) et au moins un levier de chariot (484) pouvant être manoeuvré à l'aide des moyens de manoeuvre (170 ; 370 ; 472, 474, 476 ; 978, l'au moins un levier de chariot (484) étant conçu pour déplacer le chariot (482) mobile entre une première position, qui est affectée au premier état stable du système convertisseur d'énergie (150) et une deuxième position, qui est affectée au deuxième état stable du système convertisseur d'énergie (150) ; et délivrer (220) par radio le signal de commutation à l'aide du système émetteur de signaux (140) en utilisant l'au moins une impulsion d'énergie électrique.
